(19) Europäisches Patentamt
European Patent Office
Office européen des brevets

(11) EP 4 465 566 A1

(12) EUROPEAN PATENT APPLICATION
published in accordance with Art. 153(4) EPC

(43) Date of publication:
**20.11.2024 Bulletin 2024/47**

(21) Application number: **23737451.7**

(22) Date of filing: **06.01.2023**

(51) International Patent Classification (IPC):
***H04L 1/18*** (2023.01) ***H04L 5/00*** (2006.01)
***H04W 4/06*** (2009.01) ***H04W 72/04*** (2023.01)
***H04W 72/23*** (2023.01)

(52) Cooperative Patent Classification (CPC):
**H04L 1/18; H04L 5/00; H04W 4/06; H04W 72/04; H04W 72/23**

(86) International application number:
**PCT/KR2023/000329**

(87) International publication number:
**WO 2023/132703 (13.07.2023 Gazette 2023/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.01.2022 US 202263298205 P**
**11.01.2022 KR 20220004337**

(71) Applicant: **LG Electronics Inc.**
**Yeongdeungpo-gu**
**Seoul 07336 (KR)**

(72) Inventors:
- **LEE, Youngdae**
  **Seoul 06772 (KR)**
- **YANG, Suckchel**
  **Seoul 06772 (KR)**
- **KIM, Seonwook**
  **Seoul 06772 (KR)**

(74) Representative: **Plasseraud IP**
**104 Rue de Richelieu**
**CS92104**
**75080 Paris Cedex 02 (FR)**

# (54) METHOD AND DEVICE FOR TRANSMITTING AND RECEIVING SIGNALS AND CHANNELS IN WIRELESS COMMUNICATION SYSTEM

(57) Disclosed are a method and device for transmitting and receiving signals and channels in a wireless communication system. A method performed in a wireless communication system by a terminal according to an embodiment disclosed herein comprises the steps in which: first DCI indicating a new data indicator (NDI) value and an HARQ process number value is received in a first cell; a group common PDSCH scheduled by the first DCI is received in the first cell; second DCI indicating the NDI value and the HARQ process number value is received in a second cell; and a terminal-dedicated PDSCH scheduled by the second DCI is received in the first cell. Here, the terminal-dedicated PDSCH can be received by being determined as the retransmission of a transport block (TB) of the group common PDSCH on the basis of preset conditions.

FIG.11

START
S1110
Receive first DCI indicating NDI value and HPN value on a first cell
S1120
Receive group common PDSCH scheduled by the first DCI on the first cell
S1130
Receive second DCI indicating NDI value and HPN value on a scond cell
S1140
Receive UE dedicated PDSCH scheduled by the second DCI on the first cell
END

EP 4 465 566 A1

## Description

[Technical Field]

The present disclosure relates to a wireless communication system, and more specifically, to a method and device for transmitting and receiving signals and channels based on group common in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical object of the present disclosure is to provide a method and device for performing cross-carrier scheduling and/or intra-carrier scheduling for downlink transmission and reception methods related to multicast broadcast service (MBS).

The technical object of the present disclosure is to provide a method and device for overriding multicast semi-persistent scheduling (SPS) transmission with point to point (PTP) retransmission and/or unicast transmission.

The technical objects to be achieved by the present disclosure are not limited to the above-described technical objects, and other technical objects which are not described herein will be clearly understood by those skilled in the pertinent art from the following description.

[Technical Solution]

A method performed by a user equipment in a wireless communication system according to an aspect of the present disclosure may comprise: receiving first downlink control information (DCI) indicating a new data indicator (NDI) value and a hybrid automatic repeat request (HARQ) process number value on a first cell; receiving a group common physical downlink shared channel (PDSCH) scheduled by the first DCI on the first cell,; receiving a second DCI indicating the NDI value and the HARQ process number value on a second cell; and receiving a UE-dedicated PDSCH scheduled by the second DCI on the first cell. Herein, the UE-dedicated PDSCH may be received by determining it as retransmission for a transport block (TB) of the group common PDSCH, based on a pre-configured condition.

A method performed by a network device in a wireless communication system according to an additional aspect of the present disclosure may comprise: transmitting first downlink control information (DCI) indicating a new data indicator (NDI) value and a hybrid automatic repeat request (HARQ) process number value on a first cell; transmitting a group common physical downlink shared channel (PDSCH) scheduled by the first DCI on the first cell,; transmitting a second DCI indicating the NDI value and the HARQ process number value on a second cell; and transmitting a UE-dedicated PDSCH scheduled by the second DCI on the first cell. Herein, the UE-dedicated PDSCH may be received by determining it as retransmission for a transport block (TB) of the group common PDSCH, based on a pre-configured condition.

[Technical Effects]

According to an embodiment of the present disclosure, by ensuring that cross-carrier scheduling/intra-carrier scheduling can be supported through a scheduled cell or scheduling cell for point to multipoint (PTM) transmission and point to point (PTP) retransmission, this has the effect of allowing the base station to flexibly schedule group common transmission in a carrier aggregation (CA) situation.

According to an embodiment of the present disclosure, the priority of PTP retransmission/unicast transmission for the same or different services is clarified, thereby enabling the base station to override the multicast SPS.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a method of multiple TRPs transmission in a wireless communication system to which the present disclosure may be applied.
FIG. 8 illustrates a HARQ-ACK process for downlink data in a wireless communication system to which the present disclosure can be applied.
FIG. 9 illustrates a HARQ-ACK transmission and reception procedure for a multicast PDSCH according to an embodiment of the present disclosure.
FIG. 10 illustrates transmission and reception of a group common channel and HARQ-ACK reporting thereof in a wireless communication system to which the present disclosure may be applied.
FIG. 11 is a diagram illustrating the operation of a user equipment in relation to group common transmission and reception according to an embodiment of the present disclosure.
FIG. 12 is a diagram illustrating the operation of a network device in relation to group common transmission and reception according to an embodiment of the present disclosure.
FIG. 13 illustrates an example of cross-carrier scheduling for PTP retransmission to which embodiments of the present disclosure may be applied.
FIG. 14 illustrates an example of self-scheduling for PTP retransmission to which an embodiment of the present disclosure may be applied.
FIG. 15 illustrates another example of cross-carrier scheduling for PTP retransmission to which embodiments of the present disclosure may be applied.
FIG. 16 illustrates transmission and reception of a unicast channel and a multicast channel and HARQ-ACK reporting therefor in a wireless communication system to which the present disclosure may be applied.
FIG. 17 illustrates transmission and reception of a unicast channel and a multicast channel according to the FDM method in a wireless communication system to which the present disclosure may be applied.
FIG. 18 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

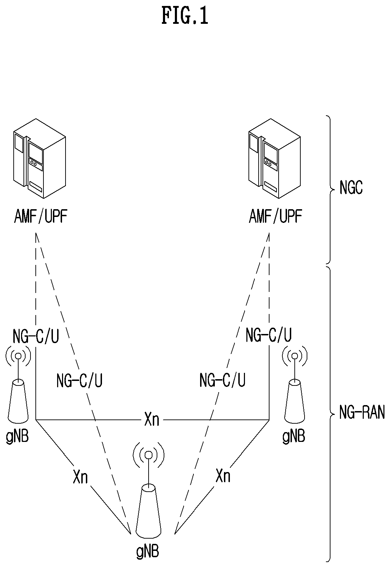

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

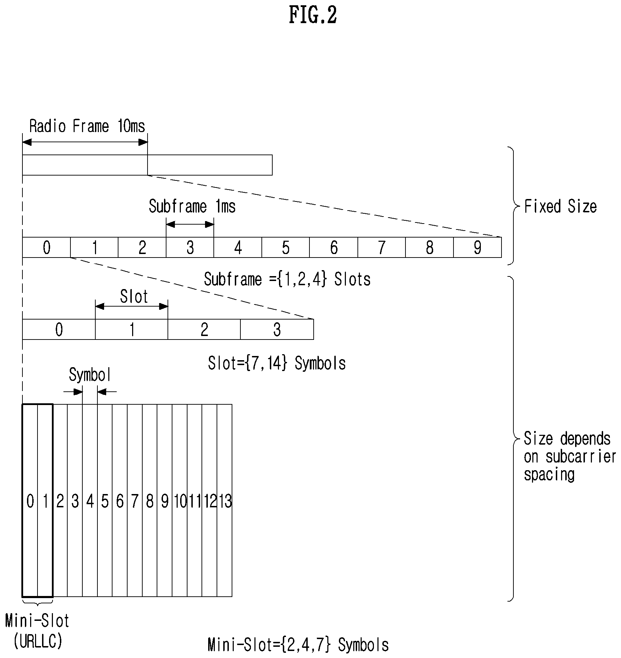

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot 10^3$ Hz and $N_f$ is 4096. Downlink and uplink transmission is configured (organized) with a radio frame having a duration of $T_f=1/(\Delta f_{max}N_f/100)\cdot T_c=10ms$. Here, a radio frame is configured with 10 subframes having a duration of $T_{sf}=(\Delta f_{max}N_f/1000)\cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu}\in\{0, ..., N_{slot}^{subframe,\mu}-1\}$ in a subframe and are numbered in an increasing order of $n_{s,f}^{\mu}\in\{0, ..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |

(continued)

| $\mu$ | $N_{symb}^{slot}$ | $N_{slot}^{frame,\mu}$ | $N_{slot}^{subframe,\mu}$ |
|---|---|---|---|
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

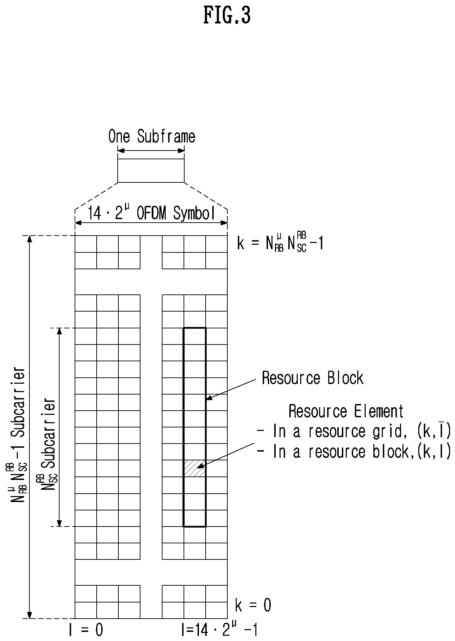

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k, l'). Here, k=0, ..., $N_{RB}^{\mu}{}_{Nsc}^{RB}$-1 is an index in a frequency domain and l'=0, ..., $2^{\mu}N_{symb}^{(\mu)}$-1 refers to a position of a symbol in a subframe. When referring to a resource element in a slot, an index pair (k,l) is used. Here, l=0,...,$N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n^{\mu}_{CRB} = \lfloor \frac{k}{N^{RB}_{sc}} \rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n^{\mu}_{CRB} = n^{\mu}_{PRB} + N^{start,\mu}_{BWP,i}$$

$N_{BWP,i}^{start,\mu}$ is a common resource block that a BWP starts relatively to common resource block 0.

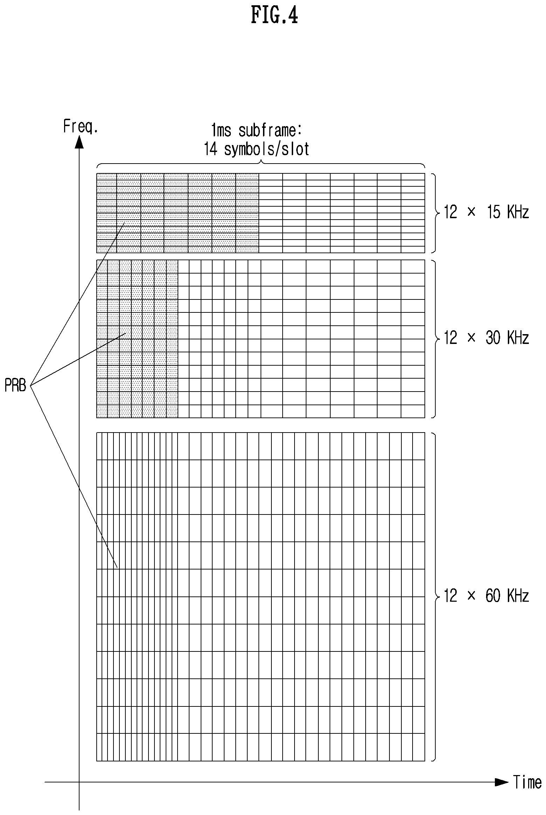

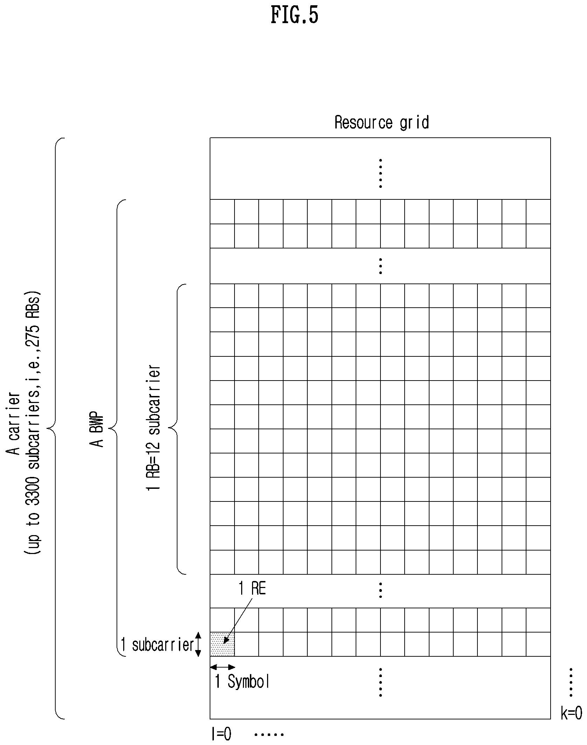

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

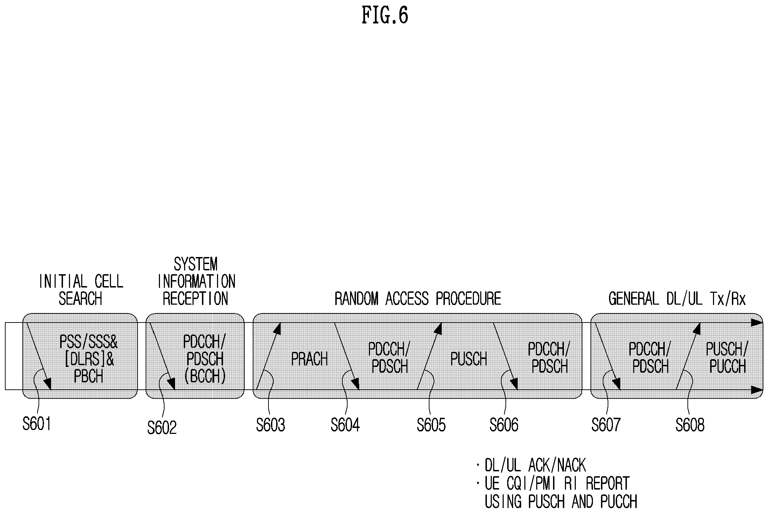

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A quasi co-location type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port(s) is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission(JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

A UE may recognize PUSCH (or PUCCH) scheduled by DCI received in different control resource sets(CORESETs)(or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/-PUCCH)transmitted to different panels belonging to the same TRP.

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

For example, a higher layer parameter, ControlResourceSet information element (IE), is used to configure a time/frequency control resource set (CORESET). In an example, the control resource set (CORESET) may be related to detection and reception of downlink control information. The ControlResourceSet IE may include a CORESET-related ID (e.g., controlResourceSetID)/an index of a CORESET pool for a CORESET (e.g., CORESETPoolIndex)/a time/frequency resource configuration of a CORESET/TCI information related to a CORESET, etc. In an example, an index of a CORESET pool (e.g., CORESETPoolIndex) may be configured as 0 or 1. In the description, a CORESET group may correspond to a CORESET pool and a CORESET group ID may correspond to a CORESET pool index (e.g., CORESETPoolIndex).

Hereinafter, a method for improving reliability in Multi-TRP will be described.

As a transmission and reception method for improving reliability using transmission in a plurality of TRPs, the following two methods may be considered.

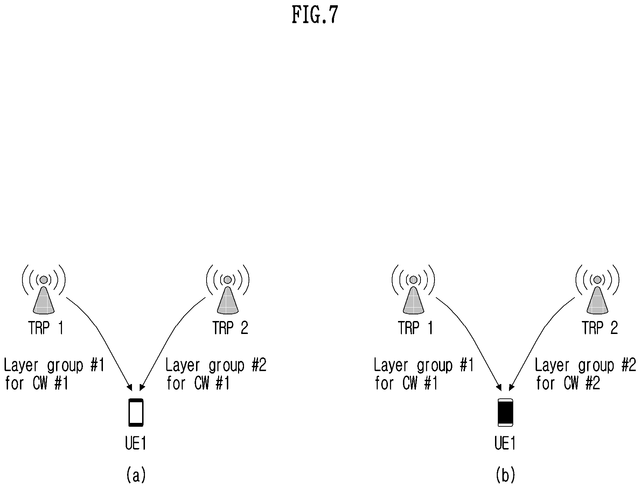

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7(a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Multi-TRP scheduled by at least one DCI may be performed as follows:

i) Scheme 1 (SDM): n (n is a natural number) TCI states in a single slot in overlapping time and frequency resource allocation

- Scheme 1a: Each transmission occasion is one layer or set of layers of the same TB, and each layer or set of layers is associated with one TCI and one set of DMRS port(s). A single codeword with one redundancy version (RV) is used for all layers or sets of layers. For a UE, different coded bits are mapped to different layers or sets of layers with specific mapping rules.
- Scheme 1b: Each transmission occasion is one layer or set of layers of the same TB, and each layer or set of layers is associated with one TCI and one set of DMRS port(s). A single codeword with one RV is used for each spatial layer or set of layers. RVs corresponding to each spatial layer or set of layers may be the same or different.
- Scheme 1c: Each transmission occasion is one layer of the same TB having one DMRS port associated with multiple TCI state indices or one layer of the same TB with multiple DMRS ports associated with multiple TCI indices in turn (one by one).

In schemes 1a and 1c described above, the same MCS is applied to all layers or sets of layers.

ii) Scheme 2 (FDM): n (n is a natural number) TCI states in a single slot in non-overlapping frequency resource allocation. Each non-overlapping frequency resource allocation is associated with one TCI state. The same single/multiple DMRS port(s) is associated with all non-overlapping frequency resource allocations.

- Scheme 2a: A single codeword with one RV is used across an entire resource allocation. For UE, a common RB mapping (mapping of codeword to layer) is applied across all resource allocations.
- Scheme 2b: A single codeword with one RV is used for each non-overlapping frequency resource allocation. RVs corresponding to each non-overlapping frequency resource allocation may be the same or different.

In scheme 2a, the same MCS is applied to all non-overlapping frequency resource allocations.

iii) Scheme 3 (TDM): n (n is a natural number) TCI states in a single slot in non-overlapping time resource allocation. Each transmission occasion of a TB has one TCI and one RV with time granularity of a mini-slot. All transmission occasion(s) in a slot use a common MCS with the same single or multiple DMRS port(s). An RV/TCI state may be the same or different among transmission occasions.

iv) Scheme 4 (TDM): n (n is a natural number) TCI states in K (n<=K, K is a natural number) different slots. Each transmission occasion of a TB has one TCI and one RV. All transmission occasion(s) across K slots use a common MCS with the same single or multiple DMRS port(s). An RV / TCI state may be the same or different among transmission occasions.

Hereinafter, in the present disclosure, DL MTRP-URLLC means that M-TRPs transmit the same data(e.g., transport block, TB)/DCI by using a different layer/time/frequency resource. For example, TRP 1 transmits the same data/DCI in resource 1 and TRP 2 transmits the same data/DCI in resource 2. UE configured with a DL MTRP-URLLC transmission method receives the same data/DCI by using a different layer/time/frequency resource. Here, UE is indicated which QCL RS/type (i.e., a DL TCI (state)) should be used in a layer/time/frequency resource receiving the same data/DCI from a base station. For example, when the same data/DCI is received in resource 1 and resource 2, a DL TCI state used in resource 1 and a DL TCI state used in resource 2 may be indicated. UE may achieve high reliability because it receives the same data/DCI through resource 1 and resource 2. Such DL MTRP URLLC may be applied to a PDSCH/a PDCCH.

Conversely, UL MTRP-URLLC means that M-TRPs receive the same data/UCI from UE by using a different layer/time/frequency resource. For example, TRP 1 receives the same data/UCI from UE in resource 1 and TRP 2 receives the same data/UCI from UE in resource 2 and shares received data/UCI through a backhaul link connected between TRPs. UE configured with a UL MTRP-URLLC transmission method transmits the same data/UCI by using a different layer/time/frequency resource. Here, UE is indicated which Tx beam and which Tx power (i.e., a UL TCI state) should be used in a layer/time/frequency resource transmitting the same data/DCI from a base station. For example, when the same data/UCI is received in resource 1 and resource 2, a UL TCI state used in resource 1 and a UL TCI state used in resource 2 may be indicated. Such UL MTRP URLLC may be applied to a PUSCH/a PUCCH.

In addition, in methods proposed in the present disclosure, when a specific TCI state (or a TCI) is used (/mapped) in receiving data/DCI/UCI for any frequency/time/space resource, it may mean that a DL estimates a channel from a DMRS by using a QCL type and a QCL RS indicated by a corresponding TCI state in that frequency/time/space resource and receives/demodulates data/DCI to an estimated channel. It may mean that an UL transmits/modulates a DMRS and data/UCI by using a Tx beam and/or Tw power indicated by a corresponding TCI state in that frequency/time/space resource.

The UL TCI state has Tx beam and/or Tx power information of UE and spatial relation information, etc. instead of a TCI state may be configured to UE through other parameter. An UL TCI state may be directly indicated to UL grant DCI or may mean spatial relation information of an SRS resource indicated by an SRI (SRS resource indicator) field of UL grant DCI. Alternatively, it may mean an OL (open loop) Tx power control parameter connected to a value indicated by a SRI field of UL grant DCI (j: an index for open loop parameter Po and alpha ($\alpha$) (up to 32 parameter value sets per cell), q_d: an index of a DL RS resource for PL (pathloss) measurement (measurement of up to 3 per cell), l: a closed loop power control process index (up to 2 processes per cell)).

On the other hand, it is assumed that MTRP-eMBB means that M-TRPs transmit other data by using a different layer/time/frequency, UE configured with a MTRP-eMBB transmission method is indicated multiple TCI states with DCI and data received by using a QCL RS of each TCI state is different data.

In addition, whether of MTRP URLLC transmission/reception or MTRP eMBB transmission/reception may be understood by UE by separately classifying a RNTI for MTRP-URLLC and a RNTI for MTRP-eMBB and using them. In other words, when CRC masking of DCI is performed by using a RNTI for URLLC, it is considered as URLLC transmission and when CRC masking of DCI is performed by using a RNTI for eMBB, it is considered as eMBB transmission. Alternatively, a base station may configure MTRP URLLC transmission/reception or may configure MTRP eMBB transmission/reception to UE through other new signaling.

In the present disclosure, for convenience of a description, a proposal is applied by assuming cooperative transmission/reception between 2 TRPs, but it may be extended and applied in 3 or more multi-TRP environments and it may be also extended and applied in multi-panel environments. A different TRP may be recognized by UE as a different transmission configuration indication (TCI) state. That is, when UE receives/transmits data/DCI/UCI by using TCI state 1, it means that data/DCI/UCI is received/transmitted from/to TRP 1.

A proposal of the present disclosure may be utilized in a situation where MTRP cooperatively transmits a PDCCH (the same PDCCH is repetitively or partitively transmitted) and some proposals may be utilized even in a situation where MTRP cooperatively transmits a PDSCH or cooperatively receives a PUSCH/a PUCCH.

In addition, in the present disclosure below, the meaning that a plurality of base stations (i.e., MTRP) repetitively transmits the same PDCCH may mean the same DCI is transmitted by a plurality of PDCCH candidates, and it is equivalent with the meaning that a plurality of base stations repetitively transmits the same DCI. The same DCI may mean two DCI with the same DCI format/size/payload. Alternatively, although two DCI have a different payload, it may be considered the same DCI when a scheduling result is the same. For example, a TDRA (time domain resource allocation) field of DCI relatively determines a slot/symbol position of data and a slot/symbol position of A/N(ACK/NACK) based on a reception time of DCI. Here, if DCI received at a time of n and DCI received at a time of n+1 represent the same scheduling result to UE, a TDRA field of two DCI is different, and consequentially, a DCI payload is different. R, the number of repetitions, may be directly indicated or mutually promised by a base station to UE. Alternatively, although a payload of two DCI is different and a scheduling result is not the same, it may be considered the same DCI when a scheduling result of one DCI is a subset of a scheduling result of other DCI. For example, when the same data is repetitively transmitted N times through TDM, DCI 1 received before first data indicates N data repetitions and DCI 2 received after first data and before second data indicates N-1 data repetitions. Scheduling data of DCI 2 becomes a subset of scheduling data of DCI 1 and two DCI is scheduling for the same data, so in this case, it may be considered the same DCI.

In addition, in the present disclosure below, when a plurality of base stations (i.e., MTRP) divide and transmit the same PDCCH, it may mean that one DCI is transmitted through one PDCCH candidate, but TRP 1 transmits some resources in which the PDCCH candidate is defined and TRP 2 transmits the remaining resources. For example, when TRP 1 and TRP 2 divide and transmit a PDCCH candidate corresponding to an aggregation level m1 + m2, the PDCCH candidate is divided into PDCCH candidate 1 corresponding to aggregation level m1 and PDCCH candidate 2 corresponding to aggregation level m2, and TRP 1 transmits the PDCCH candidate 1 and TRP 2 transmits the PDCCH candidate 2 using different time/frequency resources. After receiving the PDCCH candidate 1 and the PDCCH candidate 2, a UE generates a PDCCH candidate corresponding to aggregation level m1+m2 and attempts DCI decoding.

When the same DCI is divided and transmitted to several PDCCH candidates, there may be two implementation methods.

First, a DCI payload (control information bits + CRC) may be encoded through one channel encoder (e.g., a polar encoder), coded bits obtained as a result may be divided into two TRPs and transmitted. In this case, an entire DCI payload may be encoded in coded bits transmitted by each TRP, or only a part of a DCI payload may be encoded. Second, a DCI payload (control information bits + CRC) may be divided into two (DCI 1 and DCI 2) and each can be encoded through a channel encoder (e.g., polar encoder). Thereafter, two TRPs may transmit coded bits corresponding to DCI 1 and coded bits corresponding to DCI 2, respectively.

In summary, it may be as follows that a plurality of base stations (i.e., MTRP) divide/repeat the same PDCCH and transmit over a plurality of monitoring occasions (MO).

i) it may mean that each base station (i.e., STRP) repeatedly transmits coded DCI bits obtained by encoding all DCI contents of a corresponding PDCCH through each MO; or,
ii) it may mean that coded DCI bits obtained by encoding all DCI contents of a corresponding PDCCH are divided into a plurality of parts, and each base station (i.e., STRP) transmits a different part through each MO; or
iii) it may mean that DCI contents of a corresponding PDCCH are divided into a plurality of parts, and each base station (i.e., STRP) separately encodes different parts and transmits them through each MO.

That is, it may be understood that a PDCCH is transmitted multiple times over several transmission occasions (TO) regardless of repeated transmission or divided transmission of the PDCCH. Here, a TO means a specific time/-frequency resource unit in which a PDCCH is transmitted. For example, if a PDCCH is transmitted multiple times (in a specific resource block (RB)) over slots 1, 2, 3, and 4, a TO may mean each slot, or if a PDCCH is transmitted multiple times (in a specific slot) over RB sets 1, 2, 3, and 4, a TO may mean each RB set, or if a PDCCH is transmitted multiple times over different times and frequencies, a TO may mean each time/frequency resource. In addition, a TCI state used for DMRS channel estimation for each TO may be configured differently, and it may be assumed that TOs in which a TCI state is configured differently are transmitted by different TRPs/panels. When a plurality of base stations repeatedly transmits or dividedly transmits a PDCCH, it means that the PDCCH is transmitted over a plurality of TOs, and the union of TCI states configured in corresponding TOs is configured with two or more TCI states. For example, if a PDCCH is transmitted over TOs 1,2,3,4, TCI states 1,2,3,4 may be configured in each of TOs 1,2,3,4, respectively, which means that TRP i transmits cooperatively a PDCCH in TO i.

For a plurality of TOs indicated to a UE to repeatedly transmit or dividedly transmit a PDCCH/PDSCH/PUSCH/-PUCCH, UL transmits to a specific TRP or DL receives from a specific TRP in each TO. Here, a UL TO (or TO of TRP 1) transmitted to TRP 1 means a TO using the first value among two spatial relations, two UL TCIs, two UL power control parameters and/or two pathloss reference signals (PLRS) indicated to a UE, and a UL TO (or TO of TRP 2) transmitted to TRP 2 means a TO using the second value among two spatial relations, two UL TCIs, two UL power control parameters and/or two PLRSs indicated to a UE. Similarly, for DL transmission, a DL TO (or TO of TRP 1) transmitted by TRP 1 means a TO using the first value among two DL TCI states (e.g., when two TCI states are configured in CORESET) indicated to a UE, and a DL TO (or TO of TRP 2) transmitted by TRP 2 means a TO using the second value among two DL TCI states (e.g., when two TCI states are configured in CORESET) indicated to a UE.

The proposal of the present disclosure can be extended and applied to various channels such as PUSCH/-PUCCH/PDSCH/PDCCH.

The proposal of the present disclosure can be extended and applied to both a case of repeated transmission and a case of divided transmission the channel on different time/frequency/spatial resources.

<u>Data transmission and HARQ (Hybrid Automatic Repeat and request)-ACK (Acknowledgement) process</u>

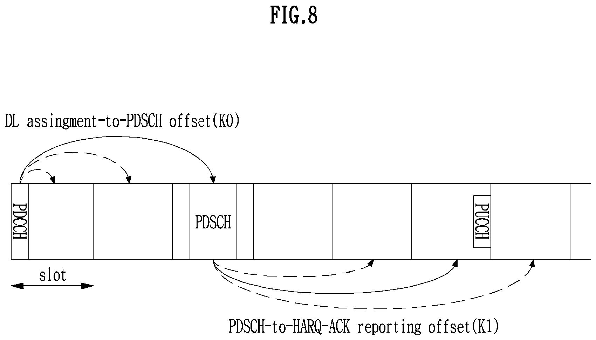

FIG. 8 illustrates a HARQ-ACK process for downlink data in a wireless communication system to which the present disclosure can be applied.

Referring to FIG. 8, a UE may detect a PDCCH in slot #n. Here, a PDCCH includes downlink scheduling information (e.g., DCI formats 1_0 and 1_1), and a PDCCH indicates a DL assignment-to-PDSCH offset (K0) and a PDSCH-HARQ-ACK reporting offset (K1). For example, DCI formats 1_0 and 1_1 may include the following information.

- Frequency domain resource assignment: Indicates an RB resource (e.g., one or more (dis)contiguous RBs) allocated to a PDSCH
- Time domain resource assignment: K0, indicating a start position (e.g., OFDM symbol index) and a length (e.g., number of OFDM symbols) of a PDSCH in a slot
- PDSCH HARQ feedback timing indicator (PDSCH-to-HARQ_feedback timing indicator): Indicates K1
- HARQ process number (4 bits): Indicates HARQ process ID (Identity) for data (e.g., PDSCH, TB)
- PUCCH resource indicator (PRI): Indicates a PUCCH resource to be used for UCI transmission among a plurality of PUCCH resources in a PUCCH resource set

Thereafter, a UE may receive a PDSCH in slot #(n+K0) according to scheduling information of slot #n, and then transmit UCI through a PUCCH in slot #(n+K1). Here, UCI includes a HARQ-ACK response for a PDSCH. If a PDSCH is configured to transmit up to 1 TB, a HARQ-ACK response may be composed of 1-bit. When a PDSCH is configured to transmit up to two TBs, a HARQ-ACK response may be composed of 2-bits if spatial bundling is not configured and 1-bit if spatial bundling is configured. When a HARQ-ACK transmission time for a plurality of PDSCHs is designated as slot #(n+K1), UCI transmitted in slot #(n+K1) includes HARQ-ACK responses for a plurality of PDSCHs.

Multimedia Broadcast/Multicast Service (MBMS)

3GPP MBMS can be divided into i) a single frequency network (SFN) method in which a plurality of base station cells are synchronized to transmit the same data through a physical multicast channel (PMCH) and ii) SC-PTM (Single Cell Point To Multipoint) method broadcasting within a cell coverage through a PDCCH/PDSCH channel. The SFN method is used to provide broadcasting services over a wide area (e.g., MBMS area) through semi-statically allocated resources, while the SC-PTM method is mainly used to provide broadcasting services only within a cell coverage through dynamic resources.

The SC-PTM provides one logical channel, an SC-MCCH (Single Cell Multicast Control Channel) and one or a plurality of logical channels, an SC-MTCH (Single Cell Multicast Traffic Channel). These logical channels are mapped to a downlink shared channel (DL-SCH), which is a transport channel, and a PDSCH, which is a physical channel. A PDSCH transmitting SC-MCCH or SC-MTCH data is scheduled through a PDCCH indicated by a group-RNTI (G-RNTI). In this case, a temporary multicast group ID (TMGI) corresponding to a service identifier (ID) may be mapped one-to-one with a specific G-RNTI value. Therefore, if a base station provides multiple services, multiple G-RNTI values may be allocated for SC-PTM transmission. One or a plurality of UEs may perform PDCCH monitoring using a specific G-RNTI to receive a specific service. Here, a DRX on-duration period may be configured exclusively for an SC-PTM for a specific service/-specific G-RNTI. In this case, the UEs wake up only for a specific on-duration period and perform PDCCH monitoring for the G-RNTI.

Method for transmitting and receiving multicast braodcast service (MBS)-related channel/signal

- PUCCH: Physical Uplink Control channel
- PUSCH: Physical Uplink Shared Channel
- MCCH: Multicast Control Channel
- MTCH: Multicast Traffic Channel
- RRM: Radio resource management
- RLM: Radio link monitoring
- SCS: Sub-carrier spacing
- RLM: Radio link monitoring
- DCI: Downlink Control Information
- CAP: Channel Access Procedure
- Ucell: Unlicensed cell
- PCell: Primary Cell
- PSCell: Primary SCG Cell
- TBS: Transport Block Size
- TDRA: Time Domain Resource Allocation
- SLIV: Starting and Length Indicator Value (An indication value for a starting symbol index and the number of symbols in a slot of a PDSCH and/or a PUSCH. It may be configured as a component of an entry constituting a TDRA field in a PDCCH that schedules a corresponding PDSCH and/or PUSCH.)

BWP: Bandwidth Part (It may be composed of continuous resource blocks (RBs) on a frequency axis. It may correspond to one numerology (e.g., SCS, CP length, slot/mini-slot duration, etc.). In addition, a plurality of BWPs may be configured in one carrier (the number of BWPs per carrier may also be limited), but the number of activated BWPs may be limited to a part (e.g., one) per carrier.)

- CORESET: control resource set (CONtrol REsourse SET) (It means a time-frequency resource region in which a PDCCH can be transmitted, and the number of CORESETs per BWP may be limited.)
- REG: Resource element group
- SFI: Slot Format Indicator (An indicator indicating a symbol level DL/UL direction within a specific slot(s), transmitted through a group common PDCCH).
- COT: Channel occupancy time
- SPS: Semi-persistent scheduling
- QCL: Quasi-Co-Location (A QCL relationship between two reference signals (RS) may mean that a QCL parameter obtained from one RS such as a Doppler shift, a Doppler spread, an average delay, a delay spread, a spatial Rx parameter, etc. can also be applied to another RS (or antenna port(s) of a corresponding RS). In the NR system, 4 QCL types are defined as follows. 'typeA': {Doppler shift, Doppler spread, average delay, delay spread}, 'typeB': {Doppler shift, Doppler spread}, 'typeC': {Doppler shift, average delay}, 'typeD': {Spatial Rx parameter}. For certain DL RS antenna port(s), a first DL RS may be configured as a reference for QCL type X (X=A, B, C, or D), and a second DL RS may be configured as a reference for QCL type Y (Y=A, B, C, or D, but X≠Y).)

TCI: Transmission Configuration Indication (One TCI state includes a QCL relationship between DM-RS ports of a PDSCH, DM-RS ports of a PDCCH, or CSI-RS port(s) of a CSI-RS resource and one or more DL RSs. For 'Transmission Configuration Indication' among fields in DCI that schedules a PDSCH, a TCI state index corresponding to each code point constituting the field is activated by a MAC control element (CE), and a TCI state configuration for each TCI state index is configured through RRC signaling. In the Rel-16 NR system, a corresponding TCI state is configured between DL RSs, but a configuration between a DL RS and a UL RS or between a UL RS and a UL RS may be allowed in a future release. Examples of a UL RS include an SRS, a PUSCH DM-RS, and a PUCCH DM-RS.)

- SRI: SRS resource indicator (It indicates one of SRS resource index values configured in 'SRS resource indicator' among fields in DCI scheduling a PUSCH. When transmitting a PUSCH, a UE may transmit the PUSCH using the same spatial domain transmission filter used for transmission and reception of a reference signal associated with the corresponding SRS resource. Here, a reference RS is configured by RRC signaling through an SRS spatial relation information parameter (SRS-SpatialRelationInfo) for each SRS resource, and an SS/PBCH block, a CSI-RS, or an SRS may be configured as the reference RS.)
- TRP: Transmission and Reception Point
- PLMN ID: Public Land Mobile Network identifier
- RACH: Random Access Channel
- RAR: Random Access Response
- Msg3: This is a message transmitted through an uplink shared channel (UL-SCH) including a C-RNTI MAC CE or a common control channel (CCCH) service data unit (SDU), provided from a higher layer, and associated with a UE Contention Resolution Identity as part of a random access procedure.
- Special Cell: In case of a dual connectivity operation, the term special cell refers to the PCell of a master cell group (MCG) or the PSCell of a secondary cell group (SCG) depending on whether a MAC entity is related to the MCG or the SCG, respectively. Otherwise, the term Special Cell refers to the PCell. The Special Cell supports PUCCH transmission and contention-based random access and is always active.
- Serving Cell: It includes the PCell, the PSCell, and the secondary cell (SCell).
- CG: Configured Grant
- Type 1 CG or Type 2 CG: Type 1 configured grant or Type 2 configured grant
- Fall-back DCI: It indicates a DCI format that can be used for a fall-back operation, and for example, corresponds to DCI formats 0_0 and 1_0.
- non-fall-back DCI: It indicates a DCI format other than the fall-back DCI, for example, corresponds to DCI formats 0_1 and 1_1.
- SS: search space
- FDRA: frequency domain resource allocation
- TDRA: time domain resource allocation
- LP, HP: Low(er) priority, High(er) priority
- A/N for cell A: A/N (acknowledgement/negative acknowledgment) information for data (e.g., PDSCH) received in cell A
- UL CI: Uplink cancelation indication
- CFR: Common frequency resource for multicast and broadcast service (MBS). One DL CFR provides group common PDCCH and group common PDSCH transmission resources for MBS transmission and reception. One UL CFR provides HARQ-ACK PUCCH resources for group common PDSCH reception. One CFR is one MBS specific BWP or one UE specific BWP. Alternatively, one or a plurality of CFRs may be configured in one UE specific BWP. One CFR is associated with one UE specific BWP.
- TMGI: Temporary Mobile Group Identity. As an MBS service identifier, it indicates a specific service.
- G-RNTI: Group Radio Network Temporary Identifier. It indicates a UE group identifier that receives an MBS.

The above contents (3GPP system, frame structure, NR system, etc.) can be applied in combination with methods proposed in the present disclosure to be described later, or it may be supplemented to clarify the technical characteristics of the methods proposed in the present disclosure. In this disclosure, '/' means 'and', 'or', or 'and/or' depending on the context.

In the prior art, a base station may configure a UE-specific SPS configuration for a specific UE and allocate a repeated downlink SPS transmission resource according to a configured period. Here, DCI of a UE-specific PDCCH may indicate activation (SPS activation) of a specific SPS configuration index, and accordingly, the corresponding UE can repeatedly receive an SPS transmission resource according to a configured period. This SPS transmission resource is used for initial HARQ (hybrid automatic repeat request) transmission, and a base station may allocate a retransmission resource of a specific SPS configuration index through DCI of a UE-specific PDCCH. For example, when a UE reports a HARQ NACK for an SPS transmission resource, a base station can allocate a retransmission resource to DCI so that a UE can receive downlink retransmission. In addition, DCI of a UE-specific PDCCH may indicate deactivation (SPS release or SPS deactivation) of a specific SPS configuration index, and a UE receiving this does not receive the indicated SPS transmission resource. Here, a cyclic redundancy check (CRC) of DCI for activation/retransmission/deactivation of the SPS is scrambled with Configured Scheduling-RNTI (CS-RNTI).

An enhanced wireless communication system (e.g., Rel-17 NR system) seeks to introduce a DL broadcast or DL multicast transmission method to support Multicast Broadcast Service (MBS) services similar to existing MBMS (e.g., LTE MBMS). The base station provides a point-to-multipoint (PTM) transmission method and/or a point-to-point (PTP) transmission method for DL broadcast or DL multicast transmission.

In a PTM transmission method for an MBS, a base station transmits a group common PDCCH and a group common PDSCH to a plurality of UEs, and a plurality of UEs simultaneously receive the same group common PDCCH and group common PDSCH transmission to decode the same MBS data.

On the other hand, in a PTP transmission scheme for an MBS, a base station transmits a UE-specific PDCCH and a UE-specific PDSCH to a specific UE, and only the corresponding UE receives the UE-specific PDCCH and the UE-specific PDSCH. Here, when there are a plurality of UEs receiving the same MBS service, a base station separately transmits the same MBS data to individual UEs through different UE-specific PDCCHs and UE-specific PDSCHs. That is, the same MBS data is provided to a plurality of UE, but different channels (i.e., PDCCH, PDCCH) are used for each UE.

As described above, in a PTM transmission method, a base station transmits a plurality of group common PDSCHs to a plurality of UEs. Here, a base station can receive UE's HARQ-ACKs for a group common PDSCH through a UE-specific PUCCH resource from a plurality of UEs.

Here, when a transport block (TB) for a multicast PDSCH (or group common PDSCH) is successfully decoded, a UE transmits an ACK as HARQ-ACK information. On the other hand, if a transport block (TB) is not successfully decoded, a UE transmits a NACK as HARQ-ACK information. This HARQ-ACK transmission method is referred to as an ACK/NACK based HARQ-ACK method (mode). In general, a UE may transmit an ACK/NACK based HARQ-ACK using a UE-specific PUCCH resource.

On the other hand, when a NACK only based HARQ-ACK method (mode) is configured for a multicast PDSCH (or group common PDSCH), a UE does not perform PUCCH transmission in case of an ACK and a UE perform PUCCH transmission in case of a NACK. Here, a PUCCH is a group common PUCCH resource, and only NACK can be transmitted as HARQ-ACK information.

Hereinafter, in the present disclosure, a DCI format (or PDCCH) for scheduling reception of a PDSCH carrying an MBS service (i.e., MBS TB) may be referred to as an MBS DCI format (or PDCCH) or a multicast DCI format (or PDCCH). For example, a DCI format (or PDCCH) with a CRC scrambled by a G-RNTI (group-RNTI) or a G-CS-RNTI ((group-configured scheduling-RNTI) scheduling PDSCH reception may be referred to as an MBS DCI format (or PDCCH) or a multicast DCI format (or PDCCH). Here, unless otherwise described in the present disclosure, an MBS DCI format (or PDCCH) or a multicast DCI format (or PDCCH) may include both a group common DCI format (or PDCCH) according to a PTM method for an MBS and a UE specific DCI format (or PDCCH) according to a PTP method for an MBS.

In addition, unless otherwise described in the present disclosure (e.g., distinction between a PDSCH by dynamic scheduling and a PDSCH by SPS), a PDSCH scheduled by an MBS DCI format (or PDCCH) or a multicast DCI format (or PDCCH) (also, a PDSCH scheduled by UE specific DCI format (or PDCCH) of a PTP method) and a group common SPS PDSCH may be collectively referred to as an MBS PDSCH or a multicast PDSCH. In other words, unless otherwise described in the present disclosure, an MBS PDSCH or multicast PDSCH may include both a group common PDSCH according to a PTM method for an MBS and a UE specific PDSCH according to a PTP method for an MBS.

In addition, HARQ-ACK information associated with a multicast (or MBS) DCI format (or PDCCH) or multicast PDSCH may be referred to as MBS HARQ-ACK information or multicast HARQ-ACK information. Unless otherwise described in the present disclosure, such MBS HARQ-ACK information or multicast HARQ-ACK information may be transmitted through a UE specific PUCCH/PUSCH according to a PTP/PTM method or may be transmitted through a group common PUCCH/PUSCH according to a PTM method.

In addition, unless otherwise described in the present disclosure (e.g., distinction between a PDSCH by dynamic scheduling and a PDSCH by SPS), a PDSCH scheduled by a unicast DCI format (or PDCCH) and a UE-specific SPS PDSCH may be collectively referred to as a unicast/UE-specific PDSCH.

In addition, in the present disclosure, when a transport block (TB) for an MBS PDSCH or multicast PDSCH is successfully decoded, a UE may transmit an ACK as HARQ-ACK information. On the other hand, if a TB for an MBS PDSCH or multicast PDSCH is not successfully decoded, a UE may transmit a NACK as HARQ-ACK information. This HARQ-ACK transmission method is referred to as an ACK/NACK based HARQ-ACK method (mode).

On the other hand, if a TB for an MBS PDSCH or multicast PDSCH is successfully decoded, a UE may not transmit HARQ-ACK information (i.e., ACK) through a PUCCH (or PUSCH). On the other hand, if a TB for an MBS PDSCH or multicast PDSCH is not successfully decoded, a UE may transmit a NACK as HARQ-ACK information. This HARQ-ACK transmission method is referred to as an NACK based HARQ-ACK method (mode). In other words, when a NACK only based HARQ-ACK method (mode) is configured, a UE may not transmit a PUCCH (or PUSCH) in case of an ACK, and may transmit a PUCCH (or PUSCH) only in case of a NACK.

In addition, in the present disclosure, a sub-slot, a mini-slot, and a symbol slot all represent a time unit smaller than one slot, and unless clearly distinguished and described for each in the present disclosure, all may be interpreted in the same meaning. Also, all of the above terms may be regarded/interpreted as one or more symbols in a slot.

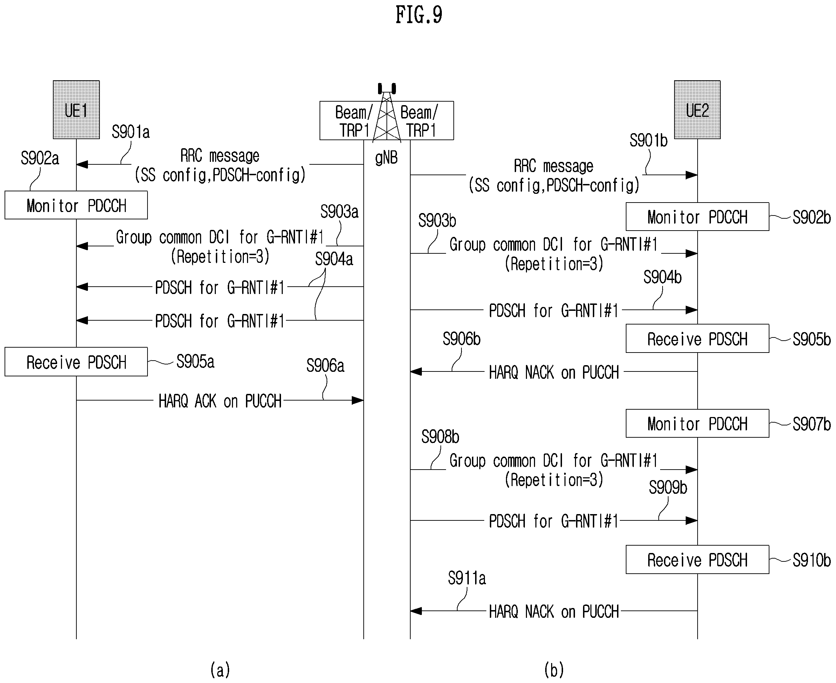

FIG. 9 illustrates a HARQ-ACK transmission and reception procedure for a multicast PDSCH according to an embodiment of the present disclosure.

FIG. 9 (a) illustrates a signaling procedure between UE1 and a base station (gNB) (beam/TRP 1), and FIG. 9(b) illustrates a signaling procedure between UE2 and a base station (gNB) (beam/TRP 2). In addition, FIG. 9(a) illustrates a case without PDSCH retransmission, and FIG. 9(b) illustrates a case with PDSCH retransmission. In FIG. 9, for convenience of description, two procedures are illustrated together, but the present disclosure is not limited thereto. That is, UE1 and UE2 are not limited to accessing the same base station (through different beams/TRPs), and are not limited to performing the two procedures together. In other words, although FIGS. 9(a) and 9(b) are separate procedures, they are shown together for convenience of explanation, and common descriptions are described for common steps.

1. Although not shown in FIG. 9, (before the procedure of FIG. 9), a UE may enter an RRC connected mode (RRC_CONNECTED mode) and may transmit a messages/information that indicates one or more MBS services of interest to a base station.

    A. The message/information may be transmitted through any one of uplink control information (UCI), a MAC control element (CE), and an RRC message.

    B. An interested MBS service in the message/information may mean either TMGI or G-RNTI included in a DL message received from a base station.

For example, the DL message may be a service availability message including TMGI#1, TMGI#3, TMGI#5 and TMGI#10. If a UE is interested in TMGI#5, the UE may indicate an order of TMGI#5 in the message/information. That is, the UE may report '3' to the base station.

As another example, the DL message may be a service availability message including G-RNTI#1, G-RNTI#3, G-RNTI#5 and G-RNTI#10. If a UE is interested in G-RNTI#10, the UE may indicate an order of G-RNTI#10 in the message/information. That is, the UE may report '4' to the base station.

2. Upon receiving the message/information, a base station may transmit at least one of i) a common frequency resource (CFR) configuration, ii) one or more group common PDSCH configurations including TCI states for one or more G-RNTI value(s), iii) a search space (SS) configuration including TCI states for one or more G-RNTI value(s) to the UE through an RRC message (S901a, S901b).

Although one RRC message is illustrated in FIG. 9, it is not limited thereto, and the configurations i) to iii) may be provided to a UE through different (or partially identical) RRC messages.

Upon receiving an RRC message from a base station, a UE may configure one or more group common PDSCH (e.g., group common SPS PDSCH) configurations according to the RRC message.

A. An RRC message may be a group common message transmitted on a PTM multicast control channel (MCCH) or a UE-specific message transmitted on a UE-specific dedicated control channel (DCCH).

B. A UE may be configured with at least a G-RNTI value for each MBS CFR or each serving cell. Alternatively, in addition to this, a GC-CS-RNTI (group common-configured scheduling-RNTI) may also be configured, and may be used for activating, retransmitting, or releasing one or more group common SPS configurations.

- if a UE has not configured with a GC-CS-RNTI for a CFR or a serving cell, when a CS-RNTI has been configured for the CFR or the serving cell, the UE may use the CS-RNTI to activate, retransmit or release one or more group common SPS configurations.
- A base station may associate a list of TMGIs or a list of G-RNTIs with one GC-CS-RNTI. In this case, a base station may provide a UE with a list of TMGIs or a list of G-RNTIs associated with the GC-CS-RNTI value.

C. Each PDSCH configuration (e.g., RRC parameter PDSCH-config) may include at least information elements (IE) for multicast and/or broadcast as shown in Table 6 below.

Table 6 illustrates the PDSCH-Config IE used to configure PDSCH parameters.

【Table 6】

```
PDSCH-Config ::= SEQUENCE {
    dataScramblingIdentityPDSCH INTEGER (0..1023) OPTIONAL, -- Need S
    dmrs-DownlinkForPDSCH-MappingTypeA SetupRelease { DMRS-DownlinkConfig } OPTIONAL, --
    Need M
    dmrs-DownlinkForPDSCH-MappingTypeB SetupRelease { DMRS-DownlinkConfig } OPTIONAL, --
    Need M
    tci-StatesToAddModList SEQUENCE (SIZE(1..maxNrofTCI-States)) OF TCI-State OPTIONAL, --
    Need N
    tci-StatesToReleaseList SEQUENCE (SIZE(1..maxNrofTCI-States)) OF TCI-StateId OPTIONAL,
    -- Need N

    vrb-ToPRB-Interleaver ENUMERATED {n2, n4} OPTIONAL, -- Need S
    resourceAllocation ENUMERATED { resourceAllocationType0, resourceAllocationType1,
    dynamicSwitch},
    pdsch-TimeDomainAllocationList SetupRelease { PDSCH-TimeDomainResourceAllocationList }
    OPTIONAL, -- Need M
    pdsch-AggregationFactor ENUMERATED { n2, n4, n8 } OPTIONAL, -- Need S
    rateMatchPatternToAddModList SEQUENCE (SIZE (1..maxNrofRateMatchPatterns)) OF
    RateMatchPattern OPTIONAL, -- Need N
    rateMatchPatternToReleaseList SEQUENCE (SIZE (1..maxNrofRateMatchPatterns)) OF
    RateMatchPatternId OPTIONAL, -- Need N
    rateMatchPatternGroup1 RateMatchPatternGroup OPTIONAL, -- Need R
    rateMatchPatternGroup2 RateMatchPatternGroup OPTIONAL, -- Need R
    rbg-Size ENUMERATED {config1, config2},
    mcs-Table ENUMERATED {qam256, qam64LowSE} OPTIONAL, -- Need S
    maxNrofCodeWordsScheduledByDCI ENUMERATED {n1, n2}
    …
}
```

Table 7 illustrates a description of the fields of the PDSCH-config of FIG. 6 above.

[Table 7]

| PDSCH-Config field descriptions |
|---|
| dataScramblingIdentityPDSCH, dataScramblingIdentityPDSCH2 Identifier(s) used to initialize data scrambling (c_init) for PDSCH. The dataScramblingIdentityPDSCH2 is configured if coresetPoolIndex is configured with 1 for at least one CORESET in the same BWP. |
| dmrs-DownlinkForPDSCH-MappingTypeA, dmrs-DownlinkForPDSCH-MappingTypeA-DCI-1-2<br>DMRS configuration for PDSCH transmissions using PDSCH mapping type A (chosen dynamically via PDSCH-TimeDomainResourceAllocation). Only the fields dmrs-Type, dmrs-AdditionalPosition and maxLength may be set differently for mapping type A and B. The field dmrs-DownlinkForPDSCH-MappingTypeA applies to DCI format 1_1 and the field dmrs-DownlinkForPDSCH-MappingTypeA-DCI-1-2 applies to DCI format 1_2. |
| dmrs-DownlinkForPDSCH-MappingTypeB, dmrs-DownlinkForPDSCH-MappingTypeB-DCI-1-2<br>DMRS configuration for PDSCH transmissions using PDSCH mapping type B (chosen dynamically via PDSCH-TimeDomainResourceAllocation). Only the fields dmrs-Type, dmrs-AdditionalPosition and maxLength may be set differently for mapping type A and B. The field dmrs-DownlinkForPDSCH-MappingTypeB applies to DCI format 1_1 and the field dmrs-DownlinkForPDSCH-MappingTypeB-DCI-1-2 applies to DCI format 1_2. |
| maxNrofCodeWordsScheduledByDCI<br>Maximum number of code words that a single DCI may schedule. This changes the number of MCS/RV/NDI bits in the DCI message from 1 to 2. |
| mcs-Table, mcs-TableDCI-1-2<br>Indicates which MCS table the UE shall use for PDSCH. If the field is absent the UE applies the value 64QAM. The field mcs-Table applies to DCI format 1_0 and DCI format 1_1, and the field mcs-TableDCI-1-2 applies to DCI format 1_2. |

(continued)

| |
|---|
| pdsch-AggregationFactor Number of repetitions for data. When the field is absent the UE applies the value 1. |
| pdsch-TimeDomainAllocationList, pdsch-TimeDomainAllocationListDCI-1-2<br>List of time-domain configurations for timing of DL assignment to DL data.<br>The field pdsch-TimeDomainAllocationList (with or without suffix) applies to DCI format 1_0 and DCI format 1_1, and if the field pdsch-TimeDomainAllocationListDCI-1-2 is not configured, to DCI format 1_2. If the field pdsch-TimeDomainAllocationListDCI-1-2 is configured, it applies to DCI format 1_2.<br>The network does not configure the pdsch-TimeDomainAllocationList-r16 simultaneously with the pdsch-TimeDomainAllocationList (without suffix) in the same PDSCH-Config. |
| rateMatchPatternGroup1, rateMatchPatternGroup1DCI-1-2<br>The IDs of a first group of RateMatchPatterns defined in PDSCH-Config->rateMatchPatternToAddModList (BWP level) or in ServingCellConfig ->rateMatchPatternToAddModList (cell level). These patterns can be activated dynamically by DCI.<br>The field rateMatchPatternGroup1 applies to DCI format 1_1, and the field rateMatchPatternGroup1DCI-1-2 applies to DCI format 1_2. |
| rateMatchPatternGroup2, rateMatchPatternGroup2DCI-1-2<br>The IDs of a second group of RateMatchPatterns defined in PDSCH-Config->rateMatchPatternToAddModList (BWP level) or in ServingCellConfig ->rateMatchPatternToAddModList (cell level). These patterns can be activated dynamically by DCI.<br>The field rateMatchPatternGroup2 applies to DCI format 1_1, and the field rateMatchPatternGroup2DCI-1-2 applies to DCI format 1_2. |
| rateMatchPatternToAddModList<br>Resources patterns which the UE should rate match PDSCH around. The UE rate matches around the union of all resources indicated in the rate match patterns. |
| rbg-Size<br>Selection between config 1 and config 2 for RBG size for PDSCH. The UE ignores this field if resourceAllocation is set to resourceAllocationType1. |
| resourceAllocation, resourceAllocationDCI-1-2<br>Configuration of resource allocation type 0 and resource allocation type 1 for non-fallback DCI. The field resourceAllocation applies to DCI format 1_1, and the field resourceAllocationDCI-1-2 applies to DCI format 1_2. |
| resourceAllocationType1GranularityDCI-1-2<br>Configure the scheduling granularity applicable for both the starting point and length indication for resource allocation type 1 in DCI format 1_2. If this field is absent, the granularity is 1 PRB. |
| tci-StatesToAddModList<br>A list of Transmission Configuration Indicator (TCI) states indicating a transmission configuration which includes QCL-relationships between the DL RSs in one RS set and the PDSCH DMRS ports. |
| vrb-ToPRB-Interleaver, vrb-ToPRB-InterleaverDCI-1-2<br>Interleaving unit configurable between 2 and 4 PRBs. When the field is absent, the UE performs non-interleaved VRB-to-PRB mapping. |

3. When a search space (SS) for a configured CFR is configured, a UE monitors a PDCCH on the SS configured in the CFR configured to receive DCI with a CRC scrambled with a G-RNTI or a G-CS-RNTI (S902a, S902b).

4. If a data unit is available in a Multicast Traffic Channel (MTCH) of an MBS radio bearer (MRB) for an MBS service, according to a service-to-resource mapping, a base station constructs and transmits a transport block (TB) including a data unit for an SPS PDSCH occasion, i) associated with an MTCH of an MRB for an MBS service, ii) associated with a TMGI of an MBS service, iii) associated with a short ID of an MBS service, or iv) associated with a G-RNTI mapped to an MBS service.

In the case of group common dynamic scheduling of a TB, a base station transmits DCI to a UE on a PDCCH (S903a, S903b) .

Here, a CRC of the DCI may be scrambled by a G-RNTI, a G-CS-RNTI or a CS-RNTI. Also, a PDCCH may be a group common PDCCH or a UE specific PDCCH.

In FIG. 9, a case in which a group common DCI with a CRC scrambled with G-RNTI#1 is transmitted, and repetition = 3 is exemplified.

The DCI may include the following information (fields).

- Identifier for DCI format: This information (field) may indicate either an MBS-specific DCI format or one of an existing DCI format for an MBS.
- Carrier indicator: This information (field) indicates a (serving or MBS specific) cell of a CFR through which a group common PDCCH/PDSCH is transmitted or a serving cell of an active BWP of a UE associated with the CFR.
- Bandwidth part indicator: This information (field) indicates a BWP ID assigned to a CFR through which a group common PDCCH/PDSCH is transmitted or a BWP ID of an active BWP of a UE associated with the CFR.

In addition, the DCI may include information on a frequency domain resource assignment, a time domain resource assignment, a VRB-to-PRB mapping, and a PRB bundling size indicator, a rate matching indicator, a ZP CSI-RS trigger, a modulation and coding scheme, a new data indicator (NDI), a redundancy version, a HARQ process number, a downlink assignment index, a transmit power control (TPC) command for a scheduled PUCCH, a PUCCH resource Indicator (PRI), a PDSCH-to-HARQ_feedback timing indicator (PDSCH-to-HARQ_feedback timing indicator), antenna port(s), a transmission configuration indication (TCI), an SRS request, a DMRS sequence initialization, and a priority indicator.

In the case of group common dynamic scheduling, a base station may provide a UE with one or more of the following service-to-resource mappings for an MBS service identified by a TMGI or a G-RNTI or a GC-CS-RNTI i) by a group common or UE-specific RRC message or ii) by a group common or UE-specific MAC CE. Data of an MBS service can be carried over an MBS radio bearer (MRB) of an MTCH associated with an MBS service, which is a multicast traffic logical channel. An RRC message may be a group common message transmitted through a PTM Multicast Control Channel (MCCH) or a UE-specific message transmitted through a UE-specific Dedicated Control Channel (DCCH). DCI scheduling a PDSCH carrying MBS service data may also indicate one or more of a short ID, an MTCH ID, an MRB ID, a G-RNTI value, and a TMGI value for an MBS service.

5. If a UE receives DCI with a CRC scrambled by a G-RNTI of interest in receiving, based on i) a mapping between MBS services and a HARQ process number (HPN) indicated in DCI and/or ii) (if available) a mapping between MBS services and an indicated short ID(s) in DCI, a UE may determine an MBS service related to one or more of short ID, MTCH ID, MRB ID, G-RNTI value, and TMGI value for each PDSCH occasion.

A base station may transmit a PDSCH carrying corresponding MBS service data to a UE (S904a, S904b) (In FIG. 9, the case where MBS service data mapped with G-RNTI#1 is transmitted is exemplified), and if a UE is interested in the determined MBS service(s), the UE can receive PDSCH transmission scheduled by DCI (S905a, S905b).

On the other hand, different from the example of FIG. 9, if a UE is not interested in the determined MBS service(s), the UE may not receive PDSCH transmission scheduled by DCI.

Then, according to the decoding state of PDSCH transmission, a UE transmits HARQ feedback to a base station.

6. A UE receiving group common DCI indicating PUCCH resource(s) for an MBS HARQ-ACK may transmit a HARQ-ACK to a base station through a PUCCH after receiving a PDSCH scheduled by DCI as follows (S906a).

A. In the case of PTM method 1, group common DCI may indicate a single PUCCH resource indicator (PRI) and a single PDSCH-to-HARQ_feedback timing indicator (K1) for at least an ACK/NACK based HARQ-ACK.

B. In case of UE-specific PUCCH resource allocation for an ACK/NACK based HARQ-ACK for group common DCI, different UEs in a group can be configured with different values of at least of a PUCCH resource and a candidate DL data-UL ACK (e.g., dl-DataToUL-ACK) in a UE-dedicated PUCCH configuration (e.g., PUCCH-config) for multicast or unicast (if PUCCH-config for multicast is not configured).

Different PUCCH resources may be allocated to different UEs by the same PUCCH resource indicator (PRI) and the same PDSCH-to-HARQ_feedback timing indicator (K1) of group common DCI.

C. In case of PTP retransmission, in UE-specific DCI, a PUCCH resource indicator (PRI) and a PDSCH-to-HARQ_feedback timing indicator (K1) can be interpreted based on a PUCCH configuration (e.g. PUCCH-config) for unicast regardless of whether or not a PUCCH configuration (e.g. PUCCH-config) for multicast is configured.

D. A PUCCH Resource Indicator (PRI) may be indicated by group common DCI as follows.

1) Option 1A-1: A list of UE specific PRIs may be included in DCI.

- Each PRI in a list may indicate an entry corresponding to a candidate PUCCH resource ID (e.g., pucch-ResourceId) value in a PUCCH configuration (e.g. PUCCH-config) for the same PUCCH resource or different PUCCH resource allocation for other UEs of a group receiving the same DCI. Other PRIs of DCI may indicate different entries in a PUCCH configuration (e.g., PUCCH-config).

- A candidate PUCCH resource ID (e.g., pucch-ResourceId) value is configured by a higher layer (e.g., RRC), at least in multicast PUCCH configuration (e.g., PUCCH-config), different PUCCH resource ID (e.g., pucch-ResourceId) values may be configured for different UEs of the same group.

2) Option 1A-2: group common PRI may be included in DCI.

- A single group common PRI may indicate a corresponding entry for a candidate PUCCH resource ID (e.g., pucch-ResourceId) value in a UE specific PUCCH configuration (e.g., PUCCH-config) for the same or different PUCCH resource allocation for all UEs in a group.
- A candidate PUCCH resource ID (e.g., pucch-ResourceId) value is configured by a higher layer (e.g., RRC), at least in PUCCH configuration for multicast (e.g., PUCCH-config), different PUCCH resource ID (e.g., pucch-ResourceId) values may be configured for different UEs of the same group.
- When a PUCCH configuration (e.g., PUCCH-config) for multicast is configured for a HARQ-ACK for a group common PDSCH scheduled by group common DCI, a UE may assume that a PRI of group common DCI indicates a corresponding entry for a candidate PUCCH resource ID (pucch-ResourceId) value in a PUCCH configuration (e.g., PUCCH-config) for multicast. That is, a PRI value of group common DCI may be interpreted based on a PUCCH configuration (e.g., PUCCH-config) for multicast.
- On the other hand, when a PUCCH configuration for multicast (e.g., PUCCH-config) is not configured for a HARQ-ACK for a group common PDSCH scheduled by group common DCI, a UE may assume that a PRI of group common DCI indicates a corresponding entry for a candidate PUCCH resource ID (pucch-ResourceId) value in a PUCCH configuration (e.g., PUCCH-config) for unicast. That is, a PRI value of group common DCI may be interpreted based on a PUCCH configuration (e.g., PUCCH-config) for unicast.

E. K1 (PDSCH-to-HARQ_feedback timing indicator) may be indicated by group common DCI as follows.

1) Option 1B-1: A list of UE specific K1 values may be included in DCI.

- Each K1 in a list may indicate the same UL slot or different UL (sub)slots for other UEs in a group.

As an example, different K1 values may be assigned to different UEs. For example, K1-UE1, K2-UE2, K3-UE3, ...

As another example, a K1 value may be shared by multiple UEs (e.g., K1-UE1/UE2, K2-UE3/UE4).

As another example, one K1 value may be a reference and other K1 values may be assigned based on the reference. For example, a list of {K1_ref, K1_offset (offset from reference)} may be indicated in DCI.

For example, UE1 may use K1_ref, UE2 may use K1_ref + K1_offest1, and UE3 may use K1_ref + K1_offest2.

2) Option 1B-2: A group common K1 value may be included in DCI.

- A single K1 value may indicate a corresponding entry for a candidate DL data-UL ACK value (e.g., dl-DataToUL-ACK) in a UE specific PUCCH configuration (e.g., PUCCH-config) for the same or different PUCCH resource allocation for all UEs of a group receiving DCI. This can be applied when a DCI format of DCI is configured in a UE specific PUCCH configuration (e.g., PUCCH-config) for a K1 value.
- A candidate DL data-UL ACK value (e.g., dl-DataToUL-ACK) is configured by a higher layer (e.g., RRC), at least the PUCCH configuration for multicast (e.g., PUCCH-config) can be different for different UEs in the same group.
- When a PUCCH configuration (e.g., PUCCH-config) for multicast is configured for a HARQ-ACK for a group common PDSCH scheduled by group common DCI, a UE may assume that a K1 value of group common DCI indicates a corresponding entry for a candidate DL data-UL ACK value (e.g., dl-DataToUL-ACK) in a PUCCH configuration (e.g., PUCCH-config) for multicast. That is, a K1 value of group common DCI may be interpreted based on a PUCCH configuration (e.g., PUCCH-config) for multicast.
- On the other hand, when a PUCCH configuration for multicast (e.g., PUCCH-config) is not configured for a HARQ-ACK for a group common PDSCH scheduled by group common DCI, a UE may assume that a K1 value of group common DCI indicates a corresponding entry for a candidate DL data-UL ACK value (e.g., dl-DataToUL-ACK) in a PUCCH configuration (e.g., PUCCH-config) for unicast. That is, a K1 value of group common DCI may be interpreted based on a PUCCH configuration (e.g., PUCCH-config) for unicast.

In addition, when receiving group common DCI with a CRC scrambled by a G-RNTI and/or UE specific DCI with a CRC scrambled by a C-RNTI, when a Type-1 HARQ-ACK codebook for a PUCCH-config for multicast and/or a PUCCH-config for unicast is configured, a UE may configure Time Domain Resource Allocation (TDRA) to generate a type 1 HARQ-ACK codebook for HARQ-ACK(s) for a group common PDSCH scheduled by group common DCI and/or a UE specific PDSCH scheduled by UE specific DCI.

7. If decoding of a TB on a PDSCH transmission occasion fails, a UE may transmit a HARQ NACK to a base station on a PUCCH resources in a configured UL CFR (S906b).

By using a PUCCH resource, a UE may also transmit a HARQ-ACK for other PDSCH transmissions such as a unicast SPS PDSCH, a dynamic unicast PDSCH, PTP retransmission, and/or a dynamic group common PDSCH. In this case, to multiplex a HARQ-ACK on a PUCCH in a (sub)slot for an SPS PDSCH for multicast, an SPS PDSCH for unicast, a dynamically scheduled multicast PDSCH, and/or a dynamically scheduled unicast PDSCH, a UE may construct a codebook based on one or more options in step 7 above.

If a reference signal received power (RSRP) threshold is configured, a UE may use a NACK only based HARQ-ACK based on a measured RSRP of a serving cell. For example, if the measured RSRP is higher than (or equal to or higher than) the threshold value, a NACK only based HARQ-ACK may be transmitted through a group common PUCCH resource indicated by a PRI of DCI. On the other hand, if the measured RSRP is lower than (or equal to or less than) the threshold, a NACK only based HARQ-ACK may be changed to a HARQ-ACK based HARQ-ACK and transmitted through a UE-specific PUCCH resource indicated by a PRI of DCI.

Meanwhile, if a PDSCH aggregation factor (pdsch-AggregationFactor) is configured for a G-RNTI or a base station indicates a repetition number (repeat_number) in DCI, a TB scheduled by group common DCI may be repeated for the Nth HARQ transmission of a TB within each symbol allocation among each PDSCH aggregation factor (pdsch-AggregationFactor) consecutive slots or among each repetition number (repeat_number) consecutive slots.

8. A base station receiving a HARQ NACK with a TCI state may retransmit a PDCCH and a PDSCH with a TCI state in a DL CFR configured for TB retransmission. A UE may monitor a group common and/or UE-specific PDCCH with a TCI state on a search space configured in a DL CFR to receive TB retransmission (S907b).

A base station may retransmit a TB to only one of UEs in a group by a UE-specific PDCCH, and other UEs may not receive retransmission of a TB (e.g., because the other UEs successfully received the TB).

9. When a UE receives a PDCCH for retransmission of a TB (S908b), a UE may receive a PDSCH scheduled by DCI of a PDCCH (S909b, S910b).

If a UE successfully decodes a TB on a PDSCH, based on a mapping between an MBS service indicated by DCI and an HPN (HARQ process number) and/or between an MBS service indicated by DCI and a short ID(s) (if available), the UE may consider that the decoded TB is associated with an MTCH, an MRB, a TMGI, a G-RNTI and/or a short ID of an MBS service.

10. If decoding of a TB succeeds in a PDSCH transmission occasion, a UE may transmit a HARQ ACK to a base station through a PUCCH resource in a UL CFR configured according to step 7. On the other hand, if decoding of a TB on a PDSCH transmission occasion fails, a UE may transmit a HARQ NACK to a base station on a PUCCH resource in a configured UL CFR (S911b).

By using a PUCCH resource, a UE may also transmit HARQ-ACKs for other PDSCH transmissions such as a unicast SPS PDSCH, a dynamic unicast PDSCH, PTP retransmission, and/or a dynamic group common PDSCH. In this case, to multiplex HARQ-ACKs on a PUCCH in a (sub)slot for an SPS PDSCH for multicast, an SPS PDSCH for unicast, a dynamically scheduled multicast PDSCH, and/or a dynamically scheduled unicast PDSCH, a UE may construct a codebook based on one or more options in step 7 above.

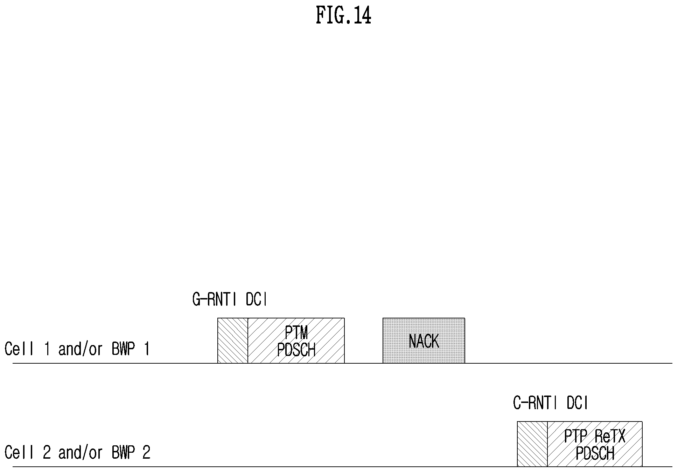

Meanwhile, an example of FIG. 9 is for convenience of description and does not limit the scope of the present disclosure. Some step(s) illustrated in FIG. 9 may be omitted depending on circumstances and/or settings. In addition, a base station and a UE in FIG. 9 are just one example, and may be implemented as the device illustrated in FIG. 14 below. For example, the processor (102/202) of FIG. 14 can control to transmit and receive channels/signals/data/information, etc. using the transceiver (106/206) and can also control to store transmitted or received channels/signals/information/-data/information, etc. in the memory (104/204).

A base station may be a general term for an object that transmits and receives data with a terminal. For example, a base station may be a concept including one or more transmission points (TPs), one or more transmission and reception points (TRPs), etc. Also, a TP and/or a TRP may include a panel of a base station, a transmission and reception unit, etc. In addition, "TRP" may be replaced with expressions such as a panel, an antenna array, a cell (e.g., macro cell / small cell / pico cell, etc.) / a TP (transmission point), base station (base station, gNB, etc.), etc. As described above, TRPs may be classified according to information (e.g., index, ID) on a CORESET group (or CORESET pool). For example, when one UE is configured to transmit/receive with multiple TRPs (or cells), this may mean that multiple CORESET groups (or CORESET pools) are configured for one UE. Configuration of such a CORESET group (or CORESET pool) may be performed through higher layer signaling (e.g., RRC signaling, etc.).

Referring to FIG. 9, signaling between one base station and a UE is considered for convenience of explanation, but the corresponding signaling scheme can be extended and applied to signaling between multiple TRPs and multiple UEs. Alternatively, a base station may include a plurality of TRPs, or may be one cell including a plurality of TRPs.

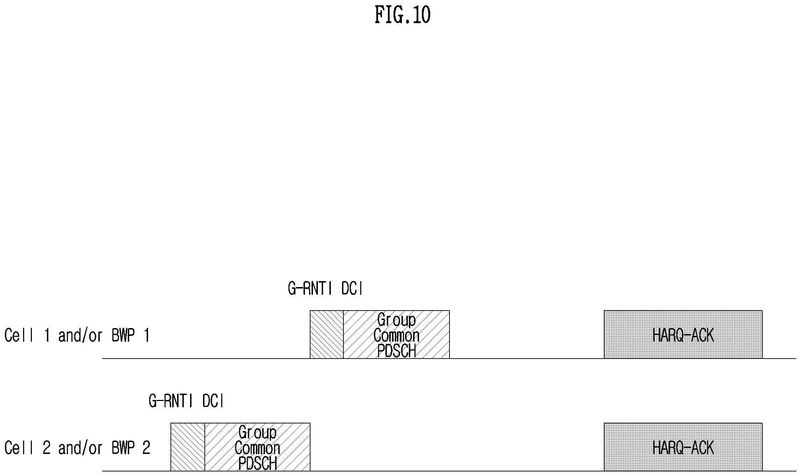

FIG. 10 illustrates transmission and reception of a group common channel and HARQ-ACK reporting thereof in a wireless communication system to which the present disclosure may be applied.

Referring to FIG. 10, G-RNTI DCI may refer to a DCI with a CRC scrambled using G-RNTI, that is, a group common DCI, and may schedule a group common PDSCH. The UE may receive group common PDCCH/PDSCH(s) scheduled through different G-RNTIs based on frequency division multiplexing (FDM) and/or time division multiplexing (TDM).

As shown in FIG. 10, in the existing MBS service, the group common DCI may schedule the group common PDSCH within the same cell. The UE may perform HARQ-ACK reporting for the group common PDSCH within the same cell.

The base station may configure/provide a PDSCH configuation for common frequency resource (CFR) to the UE separately from the PDSCH configuration (e.g., PDSCH Config) for BWP. At this time, the CFR may be associated with the active BWP of the UE, and some parameters may be configured in common for the CFR and BWP.

Accordingly, the base station may configure/provide some parameters only in one PDSCH configuration without repeating (i.e., not repeatedly configuring) to the PDSCH configuration for CFR and the PDSCH configuration for BWP. That is, if the configured value for parameter A is the same in the PDSCH configuration for CFR and the PDSCH configuration for BWP, the base station may include parameter A only in the PDSCH configuration for BWP.

Regarding carrier aggregation (CA) in existing wireless communication systems, the base station may configured the serving cell to a scheduling cell or a scheduled cell. As an example, the DCI transmitted in the scheduling cell may be configured/defined to schedule PDSCH transmission in the scheduling cell.

In this case, a UE-specific search space (USS) is configured in the scheduling cell, and a USS is not configured in the scheduled cell. At this time, there is a problem in that it may be unclear whether scheduling for multicast (i.e., group common transmission) can be performed in a scheduled cell for unicast.

Hereinafter, the present disclosure may propose a method for configuring/performing cross-carrier scheduling and/or intra-carrier scheduling for PTM transmission and PTP retransmission when the above-described CA and/or dual connectivity (DC) (based on multiple cell groups) is configured.

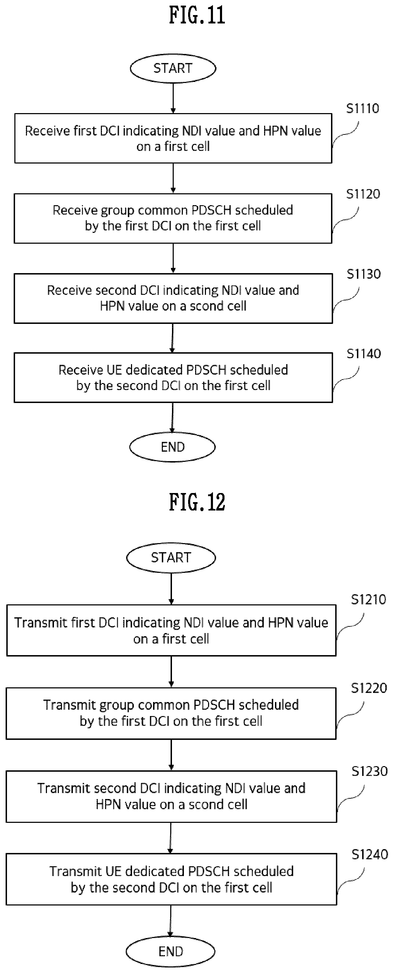

FIG. 11 is a diagram illustrating the operation of a user equipment in relation to group common transmission and reception according to an embodiment of the present disclosure.

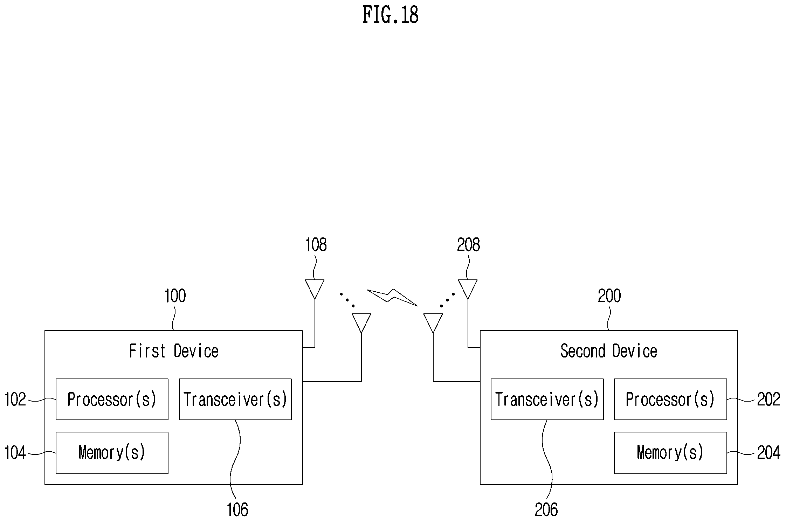

FIG. 11 illustrates an operation of the UE based on the proposed method in the present disclosure (e.g., any one of Embodiments 1 to 5 and the detailed embodiments thereof, or a combination of more than one (detailed) embodiments). The example in FIG. 11 is for convenience of explanation and does not limit the scope of the present disclosure. Some step(s) illustrated in FIG. 11 may be omitted depending on the situation and/or setting. Additionally, the UE in FIG. 11 is only examples, and may be implemented as devices illustrated in FIG. 18 below. For example, the processors 102/202 of FIG. 18 may control transmission and reception of channels/signals/data/information, etc. (e.g., RRC signaling, MAC CE, DCI for UL/DL scheduling, SRS, PDCCH, PDSCH, PUSCH, PUCCH, etc.) using the transceivers 106/206, and may control to store transmitted or received channels/signals/data/information, etc. in the memory 104/204.

Referring to FIG. 11, the UE may receive a first DCI indicating a new data indicator (NDI) value and a HARQ process number (HPN) value in the first cell (S1110).

For example, the first cell may correspond to a scheduled cell based on carrier aggregation (CA) and may correspond to a secondary cell (SCell) (e.g., scheduled SCell) .

Additionally or alternatively, the first DCI may be received through PDCCH monitoring for a common search space configured in the first cell.

Additionally or alternatively, the first DCI may correspond to a DCI format that is cyclic redundancy check (CRC) scrambled by a group-radio network temporary identifier (G-RNTI) .

The UE may receive the group common PDSCH scheduled by the first DCI in the first cell (S1120).

For example, transmission of the group common PDSCH may correspond to initial transmission of the PDSCH based on the group common DCI.

Additionally or alternatively, the group common PDSCH may include a multicast PDSCH and/or a broadcast PDSCH related to a multicast broadcast service (MBS).

The UE may receive a second DCI indicating the NDI value and the HPN value in the second cell (S1130). That is, the NDI value and HPN value indicated by the second DCI are the same as the NDI value and HPN value indicated by the first DCI.

For example, the second cell may correspond to a CA-based scheduling cell and may correspond to either a primary cell (PCell) or a secondary cell (SCell) (e.g. scheduling PCell / scheduling SCell).

Additionally or alternatively, the second DCI may be received through PDCCH monitoring for a user equipment-specific search space configured in the second cell.

Additionally or alternatively, the second DCI may correspond to a DCI format that is CRC scrambled by a common-radio network temporary identifier (C-RNTI).

The UE may receive a UE-dedicated (i.e., UE-specific) PDSCH scheduled by the second DCI (e.g., cross-carrier scheduled) in the first cell (S1140). At this time, based on a pre-configured condition, the UE-specific PDSCH may be received by determining that it is a retransmission of the transport block of the group common PDSCH. That is, the transport block (TB) of the group common PDSCH may be retransmitted through the UE-specific PDSCH. As an example, PTP PDSCH retransmission in the first cell for PTM PDSCH transmission in the first cell may be (cross-carrier) scheduled through DCI in the second cell (e.g., UE-dedicated DCI) .

For example, the pre-configured condition may include a case where cross-carrier scheduling for retransmission of the TB is configured.

Additionally or alternatively, the pre-configured condition may include a case where a common frequency resource (CFR) configuration is associated with the active bandwidth part (BWP) of the first cell. In this regard, the second DCI may further include a carrier indicator field (CIF) indicating the first cell.

FIG. 12 is a diagram illustrating the operation of a network device in relation to group common transmission and reception according to an embodiment of the present disclosure.

FIG. 12 illustrates an operation of the network device (e.g., base station, TRP, etc.) based on the proposed method in the present disclosure (e.g., any one of Embodiments 1 to 5 and the detailed embodiments thereof, or a combination of more than one (detailed) embodiments). The example in FIG. 12 is for convenience of explanation and does not limit the scope of the present disclosure. Some step(s) illustrated in FIG. 12 may be omitted depending on the situation and/or setting. Additionally, the base station in FIG. 12 is only examples, and may be implemented as devices illustrated in FIG. 18 below. For example, the processors 102/202 of FIG. 18 may control transmission and reception of channels/signals/data/information, etc. (e.g., RRC signaling, MAC CE, DCI for UL/DL scheduling, SRS, PDCCH, PDSCH, PUSCH, PUCCH, etc.) using the transceivers 106/206, and may control to store transmitted or received channels/-signals/data/information, etc. in the memory 104/204.

Referring to FIG. 12, the network device may transmit a first DCI indicating a new data indicator (NDI) value and a HARQ process number (HPN) value in the first cell (S1210).

For example, the first cell may correspond to a scheduled cell based on carrier aggregation (CA) and may correspond to a secondary cell (SCell) (e.g., scheduled SCell) .

Additionally or alternatively, the first DCI may be received through PDCCH monitoring for a common search space configured in the first cell.

Additionally or alternatively, the first DCI may correspond to a DCI format that is cyclic redundancy check (CRC) scrambled by a group-radio network temporary identifier (G-RNTI) .

The network device may transmit the group common PDSCH scheduled by the first DCI in the first cell (S1220).

For example, transmission of the group common PDSCH may correspond to initial transmission of the PDSCH based on the group common DCI.

Additionally or alternatively, the group common PDSCH may include a multicast PDSCH and/or a broadcast PDSCH related to a multicast broadcast service (MBS).

The network device may transmit a second DCI indicating the NDI value and the HPN value in the second cell (S1230). That is, the NDI value and HPN value indicated by the second DCI are the same as the NDI value and HPN value indicated by the first DCI.

For example, the second cell may correspond to a CA-based scheduling cell and may correspond to either a primary cell (PCell) or a secondary cell (SCell) (e.g. scheduling PCell / scheduling SCell).

Additionally or alternatively, the second DCI may be received through PDCCH monitoring for a user equipment-specific search space configured in the second cell.

Additionally or alternatively, the second DCI may correspond to a DCI format that is CRC scrambled by a common-radio network temporary identifier (C-RNTI).

The network device may transmit a UE-dedicated (i.e., UE-specific) PDSCH scheduled by the second DCI (e.g., cross-carrier scheduled) in the first cell (S1240). At this time, based on a pre-configured condition, the UE-specific PDSCH may be transmitted as a retransmission of the transport block of the group common PDSCH. That is, the transport block (TB) of the group common PDSCH may be retransmitted through the UE-specific PDSCH. As an example, PTP PDSCH retransmission in the first cell for PTM PDSCH transmission in the first cell may be (cross-carrier) scheduled through DCI in the second cell (e.g., UE-dedicated DCI).

For example, the pre-configured condition may include a case where cross-carrier scheduling for retransmission of the TB is configured.

Additionally or alternatively, the pre-configured condition may include a case where a common frequency resource (CFR) configuration is associated with the active bandwidth part (BWP) of the first cell. In this regard, the second DCI may further include a carrier indicator field (CIF) indicating the first cell.

Hereinafter, the present disclosure describes specific embodiments related to the above-described content and procedures.

The embodiments of the present disclosure are divided only for convenience of explanation, and some/all configurations of one embodiment may be applied in combination/combined with some/all configurations of another embodiment, or may be applied independently.

Embodiment 1

This embodiment relates to a cross-carrier scheduling scheme related to PTP retransmission.

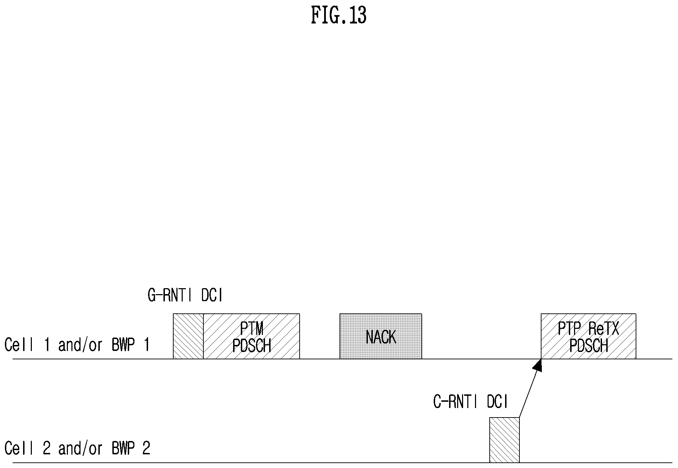

FIG. 13 illustrates an example of cross-carrier scheduling for PTP retransmission to which embodiments of the present disclosure may be applied.

Referring to FIG. 13, PTM PDSCH transmission may be scheduled by the G-RNTI DCI in the first cell (Cell 1) (and/or the first BWP (BWP 1)).

At this time, when the UE transmits/reports NACK information as HARQ-ACK information for the corresponding PTM PDSCH to the base station, scheduling for PTP PDSCH retransmission (PTP ReTX PDSCH) in the first cell (Cell 1) (and/or the first BWP (BWP 1)) may be performed by C-RNTI DCI in the second cell (Cell 2) (and/or the second BWP (BWP 2)).

That is, cross-carrier scheduling for PTP retransmission may be supported, the first cell (Cell 1) (and/or the first BWP (BWP 1)) may correspond to a scheduled cell, and the second cell (Cell 2) (and/or the second BWP (BWP 2)) may correspond to a scheduling cell.

Hereinafter, in this embodiment, proposed operations for the base station/UE in specific situations are exemplified in relation to the above-described cross-carrier scheduling.

First, when the UE specific DCI in the scheduling Scell (secondary cell) is configured to schedule the PDSCH in the PCell being scheduled for unicast, the UE may perform PDCCH monitoring and/or PDSCH reception as follows.

For example, the UE may receive a group common DCI that schedules PTM PDSCH transmission of a transport block (TB) in a scheduled PCell (PCell) through CFR based on the common search space (CSS) in the PCell. After the UE receives the group common DCI, the UE may receive a UE-specific DCI including a carrier indicator field (CIF), new data indicator (NDI), and HARQ process number (HPN) in the UE-specific search space (USS) of the scheduling SCell.

At this time, in a case that the CIF indicates a PCell where the active BWP of the UE is associated with a CFR (i.e., when a CFR is associated/configured to the active BWP of the PCell indicated by the CFI), if the NDI value and HPN value in the UE-specific DCI are the same as the NDI value and HPN value in the group common DCI, the UE may determine that the UE-specific DCI schedules PTP PDSCH retransmission for the TB (i.e., TB of PTM PDSCH transmission). That is, the UE may receive the PDSCH scheduled by the UE-specific DCI as the PTP PDSCH retransmission. Otherwise (i.e., if the NDI value and HPN value are not identical), the UE may determine that the UE-specific DCI schedules unicast transmission. That is, the UE may receive the PDSCH scheduled by the UE-specific DCI as a general unicast PDSCH transmission.

Alternatively, if the CIF indicates a PCell, but the active BWP of the UE of the PCell is not associated with a CFR, or if the CIF indicates a SCell, the UE may determine that the UE-specific DCI schedules unicast transmission. That is, the UE may receive the PDSCH scheduled by the UE-specific DCI as unicast PDSCH transmission. The decision of the UE may be performed regardless of whether the NDI value and HPN value in the UE-specific DCI are the same as the NDI value and HPN value in the group common DCI.

For another example, the UE may receive a group common DCI that schedules PTM PDSCH transmission of a transport block (TB) in a scheduled PCell through CFR based on the common search space (CSS) in the PCell. After the UE receives the group common DCI, the UE may receive a UE-specific DCI including a new data indicator (NDI) and a HARQ process number (HPN) in the UE-specific search space (USS) of the scheduling SCell.

At this time, in a case that cross-carrier scheduling of PTP retransmission without CIF is configured, if the NDI value and HPN value in the UE-specific DCI are the same as the NDI value and HPN value in the group common DCI, the UE may determine that the UE-specific DCI schedules PTP PDSCH retransmission for the TB (i.e., TB of PTM PDSCH transmission). That is, the UE may receive the PDSCH scheduled by the UE-specific DCI as the PTP PDSCH retransmission. The decision of the UE may be performed regardless of the existence of a CIF in the UE-specific DCI. Otherwise (i.e., if the NDI value and HPN value are not identical), the UE may determine that the UE-specific DCI schedules unicast transmission. That is, the UE may receive the PDSCH scheduled by the UE-specific DCI as a general unicast PDSCH transmission.

Next, if the UE specific DCI in the scheduling cell (e.g., scheduling PCell / scheduling SCell) is configured to schedule the PDSCH in the scheduled SCell for unicast, the UE may perform PDCCH monitoring and/or PDSCH reception as follows.

For example, if the UE is configured to CFR in the scheduled SCell and a specific CSS type (e.g., CSS Type 3 / Type-3 CSS) is not configured in the scheduling SCell, the UE may assume one or more of the following options (hereinafter, options 1-1 to 1-4).

(Option 1-1) PTM PDSCH in the scheduled SCell is not scheduled by the scheduling SCell.

(Option 1-2) The PTM PDSCH in the scheduled SCell may be scheduled by the scheduling SCell, based on the CSS configuration of the PCell.

(Option 1-3) If there is a CFR in the scheduled SCell, the UE may invalidate it.

(Option 1-4) The PTM PDSCH in the scheduled SCell may be scheduled by the CSS in the scheduled SCell.

For example, the UE may receive a group common DCI that schedules PTM PDSCH transmission of a transport block (TB) in a scheduled Pcell (SCell) scheduled through CFR. After the UE receives the group common DCI, the UE may receive a UE-specific DCI including a carrier indicator field (CIF), new data indicator (NDI), and HARQ process number (HPN) in the UE-specific search space (USS) of the scheduling cell.

In this case, consider the case where cross-carrier scheduling of PTP retransmission in the scheduled SCell by the USS of the scheduling cell is configured.

At this time, when the CIF indicates a scheduled SCell in which the active BWP of the UE is associated with the CFR (i.e., when a CFR is associated/configured to the active BWP of the scheduled SCell indicated by the CFI), if the NDI value and HPN value in the UE-specific DCI are the same as the NDI value and HPN value in the group common DCI, the UE may determine that the UE-specific DCI schedules PTP PDSCH retransmission for the TB (i.e., TB of PTM PDSCH transmission). That is, the UE may receive the PDSCH scheduled by the UE-specific DCI as the PTP PDSCH retransmission. Otherwise (i.e., if the NDI value and HPN value are not identical), the UE may determine that the UE-specific DCI schedules unicast transmission. That is, the UE may receive the PDSCH scheduled by the UE-specific DCI as a general unicast PDSCH transmission.

Alternatively, if the CIF indicates a scheduled SCell, but the active BWP of the UE of the scheduled SCell is not associated with the CFR, or, if the CIF indicates a PCell or a scheduling SCell, the UE may determine that the UE-specific DCI schedules unicast transmission. That is, the UE may receive the PDSCH scheduled by the UE-specific DCI as unicast PDSCH transmission. The decision of the UE may be performed regardless of whether the NDI value and HPN value in the UE-specific DCI are the same as the NDI value and HPN value in the group common DCI.

Contrary to the above, consider the case where cross-carrier scheduling of PTP retransmission in the scheduled SCell by the USS of the scheduling cell is configured.

At this time, when the CIF indicates a scheduled SCell in which the active BWP of the UE is associated with the CFR (i.e., when a CFR is associated/configured to the active BWP of the scheduled SCell indicated by the CFI), if the NDI value and HPN value in the UE-specific DCI are the same as the NDI value and HPN value in the group common DCI, the UE may invalidate the UE-specific DCI. Otherwise (i.e., if the NDI value and HPN value are not identical), the UE may determine that the UE-specific DCI schedules unicast transmission. That is, the UE may receive the PDSCH scheduled by the UE-specific DCI as a general unicast PDSCH transmission.

Alternatively, regardless of whether the NDI value and HPN value in the UE-specific DCI are the same as the NDI value and HPN value in the group common DCI, the UE may determine that the UE-specific DCI schedules unicast transmission. That is, the UE may receive the PDSCH scheduled by the UE-specific DCI as unicast PDSCH transmission.

Additionally, for carrier aggregation (CA) considering cross-carrier scheduling for multicast reception, the UE may be configured for cross scheduling of PTM transmission according to the multicast DCI format.

For example, when DCI format 4_2 is configured, the UE may perform cross-carrier scheduling or self-scheduling based on DCI format 4_2. (As an example, self-scheduling in the present disclosure may mean that the corresponding scheduling grant (e.g., DCI) and scheduling allocation (e.g., PDSCH scheduled by DCI) are transmitted and received in the same cell) In contrast, if DCI format 4_1 is configured, the UE may not be able to perform cross-carrier scheduling. Instead, the UE may only perform self-scheduling based on DCI format 4_1.

Additionally or alternatively, for the above CA case, if cross-carrier scheduling or self-scheduling of PTM transmission is configured, the UE may determine cross-carrier scheduling or self-scheduling of PTM transmission as shown in the following examples. As an example, a UE configured with CSS for PTM transmission may monitor the group common PDCCH (GC-PDCCH) in a cell with CSS configured for cross-carrier scheduling of PTM transmission. As another example, a UE that is not configured with CSS for PTM transmission may monitor the group common PDCCH (GC-PDCCH) in a cell with CSS configured for self-scheduling of PTM transmission.

Additionally or alternatively, for the above CA case, if cross-carrier scheduling or self-scheduling of PTM transmission is configured, the UE may assume that cross-carrier scheduling or self-scheduling of PTP retransmission is also configured for the PTP PDSCH in the same cell. Alternatively, the UE may assume that cross-carrier scheduling or self-scheduling of PTP retransmission is individually configured.

In this regard, the UE may determine cross-carrier scheduling or self-scheduling of PTP retransmission for the above-described PTM transmission as shown in the following examples. As an example, the UE(s) configured with CSS for PTP retransmission may monitor the group common PDCCH (GC-PDCCH) in a cell where USS is configured for cross-carrier scheduling of PTP PDSCH retransmission in the cell in which PTM transmission was received. As another example, the UE(s) configured with CSS for PTP retransmission may monitor the group common PDCCH (GC-PDCCH) in a cell where USS is configured for self-scheduling of PTM PDSCH transmission in the cell where PTM transmission is received.

Embodiment 2

This embodiment relates to a method of performing multicast reception in SCell based on self-scheduling.

For example, assuming that the multicast DCI format does not include CIF, in order for the UE to monitor the multicast DCI format, a specific CSS type (e.g., CSS Type 3 / Type-3 CSS) needs to be configured in the SCell.

If the UE is configured to CFR in the scheduled SCell, and the specific CSS type is not configured in the scheduled SCell, the UE may assume one or more of the following options (hereinafter, options 2-1 to 2-4).

(Option 2-1) PTM PDSCH in the scheduled SCell is not scheduled by the scheduled SCell.

In this regard, the PTM PDSCH in the scheduled SCell may be scheduled by the scheduling SCell. In the case of CSS for scheduling SCell, the multicast DCI format for scheduling PTM PDSCH in a scheduled SCell may include CIF. If CIF is not included, the UE may assume that the multicast DCI format in the scheduling cell schedules only the PTM PDSCH in the scheduled SCell.

(Option 2-2) The PTM PDSCH in the scheduled SCell may be scheduled by the scheduled SCell based on the CSS configuration of the PCell.

In this regard, in the case of CSS of a scheduled SCell, the multicast DCI format for scheduling PTM PDSCH in a scheduled SCell may not include CIF. The UE may assume that the multicast DCI format in the scheduled cell schedules only the PTM PDSCH in the scheduled SCell.

(Option 2-3) If there is a CFR in the scheduled SCell, the UE may invalidate it.

(Option 2-4) PTM PDSCH in scheduled SCell may be scheduled not by the SCell, but by the CSS on the scheduling PCell or SCell (i.e., cross-carrier scheduling).

In this regard, in the case of CSS of scheduling SCell, the multicast DCI format for scheduling PTM PDSCH in a scheduled SCell may include CIF. If CIF is not included, the UE may assume that the multicast DCI format in the scheduling cell schedules only the PTM PDSCH in the scheduled SCell.

Embodiment 3

This embodiment relates to a method of receiving multiple PDSCHs from multiple CFRs of multiple serving cells.

For example, the UE may perform reception only on the SCell for multicast, not on the PCell, at the same time depending on the UE capability.

For example, a case in which the UE is interested in receiving multiple G-RNTIs in multiple serving cells (i.e., monitoring PDCCH(s) based on multiple G-RNTIs), but FDMed PDSCHs for multiple G-RNTIs cannot be received may be considered.

Regarding the above case, if multiple serving cells are configured for the same G-RNTI, the base station (e.g., gNB) may inform the UE of information on which serving cell is used for PDSCH scheduling for the corresponding G-RNTI through a specific signaling (e.g., RRC message / MAC-CE / DCI, etc.). Additionally, the base station may inform the UE of information indicating that the serving cell has been changed to another serving cell for PDSCH scheduling for the corresponding G-RNTI.

Additionally or alternatively, regarding the above case, if different search spaces are configured for multicast in one or more serving cells, or if different search spaces for multicast in one or more serving cells overlap in the same slot, the base station/UE may operate according to at least one of the following options (hereinafter, options 3-1 to 3-4) .

(Option 3-1) The UE may prioritize PDCCH monitoring in the search space for multicast in the serving cell with the lowest serving cell index or lowest CIF value. In this regard, the UE may drop PDCCH monitoring in the search space(s) for multicast at a serving cell index higher than the lowest serving cell index or another serving cell index with a CIF value higher than the lowest CIF value.

(Option 3-2) The UE may prioritize PDCCH monitoring in the search space for multicast in the PCell. In this regard, the UE may drop PDCCH monitoring in the search space(s) for multicast in the SCell(s).

(Option 3-3) The UE may prioritize PDCCH monitoring in the search space for multicast in another serving cell to which another G-RNTI with high priority is mapped. In this regard, the UE may drop PDCCH monitoring in the search space(s) for multicast in another serving cell to which the G-RNTI with low priority is mapped.

Additionally or alternatively, if multiple serving cells are mapped to the same G-RNTI with high priority, the UE may select the serving cell with the lowest serving cell index or lowest CIF value among the plurality of serving cells. At this time, the UE may drop PDCCH monitoring in the search space(s) for multicast in other serving cells mapped to the same G-RNTI. Alternatively, if multiple serving cells are mapped to a G-RNTI with high priority, the UE may select a PCell from among the serving cells. At this time, the UE may drop PDCCH monitoring in the search space(s) for multicast in the SCell(s) mapped to the same G-RNTI. Alternatively, if multiple serving cells are mapped to a G-RNTI with high priority, the UE may prioritize PDCCH monitoring in the search space for multicast with the lowest search space index among multiple serving cells mapped to the same G-RNTI. At this time, the UE may drop PDCCH monitoring in other search space(s) for multicast among multiple serving cells mapped to the same G-RNTI.

(Option 3-4) The UE may prioritize PDCCH monitoring in the search space for multicast with the lowest search space index among multiple overlapping search spaces of one or more serving cells.

Additionally or alternatively, in relation to the above case, when multicast DCI (s) schedules PDSCHs overlapping in the same slot and the scheduled PDSCH transmits the same TB or different TBs for the same G-RNTI in one or more serving cells, the base station/UE may operate according to at least one of the following options (hereinafter, options 3-5 to 3-8).

(Option 3-5) The UE may receive a PDSCH scheduled by a DCI indicating a high priority among the PDSCHs, while receiving a PDSCH scheduled by a DCI indicating a low priority may be dropped.

(Option 3-6) Among the PDSCHs, the UE may receive the PDSCH in the PCell, while dropping the PDSCH in the SCell.

(Options 3-7) The UE may drop PDSCH in another cell (s) while receiving PDSCH from cells with the lowest serving cell index or the lowest CIF value of the PDSCHs.

(Options 3-8) The UE may receive the PDSCH scheduled by the DCI in the search space with the lowest search space index among the PDSCHs, while dropping the reception of the PDSCH scheduled by the DCI in other search space(s).

Additionally or alternatively, in relation to the above case, when multicast DCI(s) in one or more serving cells schedule overlapping PDSCHs in the same slot and the scheduled PDSCHs transmit TBs for different G-RNTIs, the base station/UE may operate according to at least one of the following options (hereinafter, options 3-9 to 3-12).

(Option 3-9) Among the PDSCHs, the UE may receive the PDSCH scheduled by the DCI for the G-RNTI(s) with high priority, while receiving the PDSCH scheduled by the DCI for other G-RNTI(s) with low priority is dropped. In this regard, the base station may inform the UE of information on the priority of each G-RNTI that the UE wishes to receive through a specific signaling (e.g., RRC message / MAC-CE / DCI, etc.).

(Option 3-10) Among the PDSCHs, the UE may receive the PDSCH in the PCell, while dropping the PDSCH reception in the SCell.

(Option 3-11) Among the PDSCHs, the UE may receive a PDSCH from a cell with the lowest serving cell index or lowest CIF value, while dropping PDSCH reception from other cell(s).

(Option 3-12) Among the PDSCHs, the UE may receive the PDSCH scheduled by the DCI in the search space with the lowest search space index, while dropping the reception of the PDSCH scheduled by the DCI in other search space(s).

Additionally or alternatively, in connection with the above case, when multicast DCI(s) in one or more serving cells schedule overlapping PDSCHs in the same slot and the UE receives one PDSCH among the PDSCHs, the UE may include ACK or NACK for the received PDSCH in the HARQ-ACK codebook, depending on the decoding result of the received PDSCH. On the other hand, in this case, the UE may include NACK in the HARQ-ACK codebook for all other PDSCHs.

In this regard, the UE may transmit the HARQ-ACK codebook on PDCCH and/or PDSCH as shown in the following examples. As an example, the UE may always transmit the HARQ-ACK codebook on the PCell, regardless of the cell in which the PDSCH is received. As another example, the UE may transmit the HARQ-ACK codebook in PUCCH-SCell when configured by the base station, regardless of the cell in which the PDSCH is received. As another example, the UE may transmit the HARQ-ACK codebook on the PUCCH-SCell or PCell of the PUCCH group to which the cell in which the PDSCH is received belongs.

Alternatively, if the UE receives one PDSCH among the PDSCHs and the scheduled PDSCHs transmit the same TB or TBs for the same G-RNTI, the UE may include all ACK or all NACK in the HARQ-ACK codebook for all scheduled PDSCHs, depending on the decoding result of the received PDSCH. That is, the UE may duplicate the decoding results of the received PDSCH for all PDSCHs scheduled in the HARQ-ACK codebook.

Alternatively, if the UE receives one PDSCH among the PDSCHs and the scheduled PDSCHs transmit the same TB or TBs for the same G-RNTI, the UE may include ACK or NACK in the HARQ-ACK codebook for the received PDSCH, depending on the decoding result of the received PDSCH. On the other hand, in this case, the UE may not include HARQ feedback in the HARQ-ACK codebook for other PDSCHs.

## Embodiment 4

This embodiment relates to a method of transmitting and receiving a group common PDCCH/PDSCH (e.g., multicast PDCCH/PDSCH) when carrier aggregation (CA) (and/or DC (dual connectivity)) is configured for unicast.

In this example below, a CA scheduled cell may refer to a cell scheduled by another cell in relation to CA, and a CA scheduling cell may refer to a cell that schedules other cells in relation to the CA.

In relation to transmission and reception of the above-described group common PDCCH/PDSCH, at least one of the methods proposed in this embodiment below may be applied.

First, a method may be applied that does not configure CFR in a CA scheduled cell and does not support transmission of group common PDCCH/PDSCH (e.g., multicast PDCCH/PDSCH).

At this time, SS/CORESET for multicast cannot be configured in the scheduled cell. Additionally or alternatively, the UE may ignore the SS/CORESET configuration for multicast of the scheduled cell, consider an invalid configuration, or determine that the SS/CORESET configuration in the scheduled cell is not for multicast purposes.

In this case, CFR may be configured only in the CA scheduling cell, or transmission of group common PDCCH/PDSCH (e.g., multicast PDCCH/PDSCH) may be supported.

Next, a method in which CFR is configured in a CA scheduled cell and supports group common transmission may be applied.

In this regard, PDCCH configuration (PDCCH-Config) and PDSCH configuration (PDSCH-Config) used for multicast transmission may be configured/provided for the CFR of the scheduled cell. At this time, SS/CORESET for multicast use may be configured in the scheduled cell.

In this method, intra-carrier scheduling of unicast transmission in a CA scheduled cell may not be supported. However, when a PDCCH configuration (PDCCH-Config) and a PDSCH configuration (PDSCH-Config) for multicast purposes are configured/provided in a scheduled cell, the UE may exceptionally expect intra-carrier scheduling to be possible only for group common transmission.

Additionally or alternatively, PDSCH configuration (PDSCH-Config) used for multicast transmission may be configured/provided for the CFR of the scheduled cell, but PDCCH configuration (PDCCH-Config) used for multicast transmission may not be configured/provided.

In this case, as shown in FIG. 13 described above, the PDSCH of the CA scheduled cell may be scheduled using the DCI of the G-RNTI transmitted from the CA scheduling cell (i.e., cross-carrier scheduling). At this time, the DCI of the G-RNTI may include a cell index. The base station may configure/provide relevant information through an RRC message dedicated to individual UEs so that all UEs in the group may interpret the cell index of the group common DCI as the same cell.

In a case that CFR is configured in the CA scheduling cell, if there is no PDSCH configuration (PDSCH-Config) for the CFR, only cross-carrier scheduling may be possible. In this regard, the UE may expect only when the PDSCH of the CA scheduled cell is scheduled (i.e., cross-carrier scheduled) using the DCI of the G-RNTI transmitted from the CA scheduling cell. In this case, the group common DCI of the G-RNTI does not need to include a cell index indicating the CA scheduled cell. In addition, the UE depends on the RRC message configuration of the base station, it may be determined that the DCI of the G-RNTI transmitted from a specific CA scheduling cell performs cross-carrier scheduling only on the PDSCH of the specific CA scheduled cell.

Additionally or alternatively, in a case that CFR is configured in the CA scheduling cell, if there is a PDSCH configuration (PDSCH-Config) for the CFR, Cross-carrier scheduling or intra-carrier scheduling may be indicated using the cell index of the group common DCI. Therefore, the UE may receive the group common PDSCH from a CA scheduled cell or a CA scheduling cell according to the cell index of the group common DCI.

Next, even if there are PDCCH configuration (PDCCH-Config) and PDSCH configuration (PDSCH-Config) for group common (e.g. multicast) use for CA scheduled cells, a method may be applied in which the UE does not expect PTP retransmission from any cell from the base station. Alternatively, in this case, a method may be applied in which the UE does not expect PTP retransmission only from the CA scheduled cell, but expects PTP retransmission only from the CA scheduling cell.

FIG. 14 illustrates an example of self-scheduling for PTP retransmission to which an embodiment of the present disclosure may be applied.

Referring to FIG. 14, it illustrates self-scheduling PTP retransmission of the base station for CA, DC, and/or multiple BWP configurations.

PTM PDSCH transmission may be scheduled by the G-RNTI DCI in the first cell (e.g., Cell 1) (and/or the first BWP (BWP 1)). At this time, when the UE transmits/reports NACK information for the corresponding PTM PDSCH to the base station as HARQ-ACK information, C-RNTI DCI in the second cell (Cell 2) (and/or the second BWP (BWP 2)) may schedule PTP PDSCH retransmission (PTP ReTX PDSCH) in the second cell (Cell 2) (and/or the second BWP (BWP 2)).

In this regard, the operation methods (hereinafter, methods 1 to 5) of a cell that schedules group common (e.g., broadcast and/or multicast) transmission for MBS or is scheduled may be as follows.

(Method 1) For example, when the base station receives a NACK (i.e., NACK information) from a specific UE for a TB transmitted through PTM PDSCH in the first cell (i.e., Cell 1), the base station may schedule PTP PDSCH retransmission in the second cell through DCI in the second cell (ie, Cell 2). Here, the first cell may correspond to a CA scheduled cell, and the second cell may correspond to a CA scheduling cell. At this time, the base station may receive the NACK from the first cell as shown in FIG. 14 through UE-common PUCCH transmission, or may receive it from the second cell through UE-specific PUCCH transmission.

(Method 2) For another example, when the base station receives a NACK (i.e., NACK information) from a specific UE for a TB transmitted through PTM PDSCH in the first cell (i.e., Cell 1), the base station may indicate PTM transmission in the first cell through DCI in the second cell (i.e., Cell 2) and schedule PTP PDSCH retransmission in the second cell. Here, the first cell may correspond to a CA scheduled cell, and the second cell may correspond to a CA scheduling cell.

In this regard, the DCI of the second cell may include a cell index for the first cell and an indicator indicating/representing PTP retransmission. Depending on the configuration of the base station, the UE may soft combine the TB received through the PTM PDSCH of the first cell and the TB received through the PTP PDSCH retransmission of the second cell as a soft buffer in the same HARQ process, according to the cell index for the first cell indicated by the DCI of the second cell. The base station may receive the NACK from the first cell as shown in FIG. 14 through UE-common PUCCH transmission, or may receive it from the second cell through UE-specific PUCCH transmission.

(Method 3) For another example, when the base station receives a NACK (i.e., NACK information) from a specific UE for a TB transmitted through PTM PDSCH in the first cell (i.e., Cell 1), the base station may schedule PTP PDSCH retransmission in the first cell through DCI in the second cell (ie, Cell 2). Here, the first cell may correspond to a CA scheduled cell, and the second cell may correspond to a CA scheduling cell.

In this regard, as shown in FIG. 13, the DCI of the second cell may include a cell index for the first cell and an indicator indicating/representing PTP retransmission. Depending on the configuration of the base station, the UE may receive a PTP PDSCH retransmission in the first cell according to the cell index for the first cell indicated by the DCI of the second cell. The UE may soft combine the TB received through the PTM PDSCH of the first cell and the TB received through the PTP PDSCH retransmission of the first cell as a soft buffer in the same HARQ process.

(Method 4) As another example, the base station may semi-statically match the PTM transmission of the first cell and the PTP retransmission of the second cell through certain signaling (e.g. RRC message / MAC-CE, etc.). In this case, the DCI for PTP retransmission may not need to indicate the cell for PTM transmission. Through a specific signaling (e.g., RRC message / MAC-CE, etc.), if the HARQ process number (HPN) of the DCI is the same, the UE may process the PTM transmission in the first cell and the PTP retransmission in the second cell as having transmitted the same TB and perform soft combining as a soft buffer of the same HARQ process.

(Method 5) For another example, a CA scheduled cell may support both self-scheduling (i.e., self-carrier scheduling) and cross-carrier scheduling for PTP retransmission. That is, for PTP retransmission, the base station may transmit PTP PDCCH in a CA scheduled cell or CA scheduling cell, and transmit PTP PDSCH in a CA scheduled cell. As an example, the base station may be configured to support both method 3 and method 1 or method 2 described above. At this time, DCI for PTP retransmission may be transmitted through PCell or SCell.

In the above-described methods (e.g., methods 1 to 5), when the second cell is a CA scheduled cell, the DCI of the C-RNTI that schedules PTP retransmission may be transmitted through common search space (CSS). Alternatively, when a UE-specific search space (USS) is configured in the second cell, the base station may schedule PTP retransmission through the USS.

In the above-described methods (e.g., methods 1 to 5), when the second cell is a CA scheduling cell, the DCI of the C-RNTI scheduling PTP retransmission may schedule PTP retransmission through CSS or USS.

Next, when there is a PDCCH configuration (PDCCH-Config) and a PDSCH configuration (PDSCH-Config) for group common (e.g. multicast) use for the CA scheduled cell, a method may be applied in which the UE expects PTP retransmission for PTM initial transmission in a CA scheduled cell.

In this regard, the operation methods (hereinafter, methods A to F) of a cell that schedules group common (e.g. broadcast and/or multicast) transmission for MBS or is scheduled may be as follows.

(Method A) For example, the case where PTP retransmission is self-scheduling (i.e., self-carrier scheduling) of a CA scheduled cell may be considered. At this time, when the base station receives a NACK (i.e., NACK information) from a specific terminal for the TB transmitted through the PTM PDSCH of the first cell, the base station may schedule PTP PDSCH retransmission of the first cell through the DCI of the first cell. Here, the first cell may correspond to a CA scheduled cell.

For the first cell, which is a CA scheduled cell, the DCI of the C-RNTI scheduling PTP retransmission may be transmitted through CSS. Alternatively, if USS is configured in the first cell, the base station may schedule PTP retransmission over USS.

(Method B) For another example, the case where PTP retransmission is cross-carrier scheduling of a CA scheduled cell may be considered.

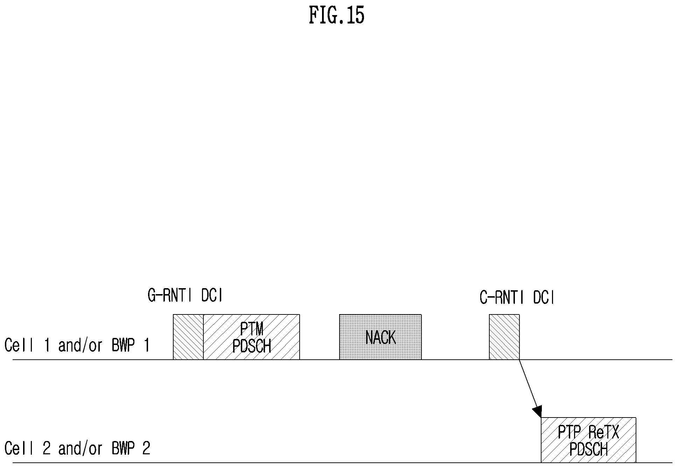

FIG. 15 illustrates another example of cross-carrier scheduling for PTP retransmission to which embodiments of the present disclosure may be applied.

Referring to FIG. 15, PTM PDSCH transmission may be scheduled by the G-RNTI DCI in the first cell (Cell 1) (and/or the first BWP (BWP 1)).

At this time, when the UE transmits/reports NACK information for the corresponding PTM PDSCH to the base station as HARQ-ACK information, scheduling for PTP PDSCH retransmission (PTP ReTX PDSCH) in the second cell (Cell 2) (and/or the second BWP (BWP 2)) may be performed by C-RNTI DCI in the first cell (Cell 1) (and/or the first BWP (BWP 1)). That is, cross-carrier scheduling for PTP retransmission may be supported.

In this regard, when the base station receives a NACK from a specific terminal for the TB transmitted through the PTM PDSCH of the first cell as shown in FIG. 15, the base station may schedule PTP PDSCH retransmission of the second cell through the DCI of the first cell. Here, the first cell may correspond to a CA scheduled cell, and the second cell may correspond to a CA scheduled cell or a CA scheduling cell.

That is, in the case of PTP retransmission, the PDCCH may be transmitted in a CA scheduled cell, and the PDSCH may be transmitted in another serving cell. At this time, for the first cell, which is a CA scheduled cell, the DCI of the C-RNTI scheduling PTP retransmission may be transmitted through CSS. Alternatively, if USS is configured in the first cell, the base station may schedule PTP retransmission through USS.

The UE may soft combine the TB received through the PTM PDSCH of the first cell and the TB received through the PTP PDSCH retransmission of the second cell as a soft buffer of the same HARQ process.

(Method C) For another example, when the base station receives a NACK (i.e., NACK information) from a specific UE for a TB transmitted through PTM PDSCH in the first cell (i.e., Cell 1), the base station may schedule PTP PDSCH retransmission in the second cell through DCI in the second cell (ie, Cell 2). Here, both the first cell and the second cell may correspond to CA scheduled cells.

At this time, the base station may receive the NACK from the first cell as shown in FIG. 14 through UE-common PUCCH transmission, or may receive it from the second cell through UE-specific PDCCH transmission.

(Method D) For another example, when the base station receives a NACK (i.e., NACK information) from a specific UE for a TB transmitted through PTM PDSCH in the first cell (i.e., Cell 1), the base station may indicate PTM transmission of the first cell through DCI in the second cell (i.e., Cell 2) and schedule PTP PDSCH retransmission in the second cell. Here, both the first cell and the second cell may correspond to CA scheduled cells.

In this regard, the DCI of the second cell may include a cell index for the first cell and an indicator indicating/representing PTP retransmission. Depending on the configuration of the base station, the UE may soft combine the TB received through the PTM PDSCH of the first cell and the TB received through the PTP PDSCH retransmission of the second cell as a soft buffer in the same HARQ process, according to the cell index for the first cell indicated by the DCI of the second cell. The base station may receive the NACK from the first cell as shown in FIG. 14 through UE-common PUCCH transmission, or may receive it from the second cell through UE-specific PDCCH transmission.

(Method E) For another example, the base station may semi-statically match the PTM transmission of the first cell and the PTP retransmission of the second cell through a specific signaling (e.g., RRC message / MAC-CE, etc.). In this case, the DCI for PTP retransmission may not need to indicate the cell for PTM transmission. Through some signaling (e.g., RRC message / MAC-CE, etc.), if the HARQ process number (HPN) of the DCI is the same, the UE may process the PTM transmission in the first cell and the PTP retransmission in the second cell as having transmitted the same TB and perform soft combining as a soft buffer of the same HARQ process.

(Method F) For another example, a CA scheduled cell may support both self-scheduling (i.e., self-carrier scheduling) and cross-carrier scheduling for PTP retransmission. That is, for PTP retransmission, the base station may transmit PTP PDCCH in a CA scheduled cell or CA scheduling cell, and transmit PTP PDSCH in a CA scheduled cell. As an example, the base station may be configured to support both Method B and Method A, Method C, or Method D described above. At this time, DCI for PTP retransmission may be transmitted through PCell or SCell.

In relation to the methods described above in this embodiment, the first cell may be replaced with the first BWP (ie, BWP 1), and the second cell may be replaced with the second BWP (ie, BWP 2). Here, the first BWP and the second BWP may be configured to belong to the same cell or may be configured to belong to different cells.

## Embodiment 5

This embodiment relates to a method of overriding multicast SPS transmission with PTP retransmission or unicast transmission for the same or different services.

In the case of an existing wireless communication system, activation/deactivation of multicast SPS is indicated/performed based on DCI. However, in the case of broadcast SPS, instead of DCI-based activation, activation through an RRC message may be considered. In this case, since multiple UEs activate/deactivate the same broadcast SPS transmission, there is a problem in that it is not clear at what point in time activation/deactivation should be performed from the UE side.

Additionally, for the same or different services, in relation to multicast SPS transmission, when the UE receives a PTP retransmission or unicast transmission in the same slot, there is a problem where it is not clear which transmission the UE should receive priority.

In order to solve the above-mentioned problems, this embodiment propose methods related to overriding multicast SPS transmission with PTP retransmission or unicast transmission for the same or different services.

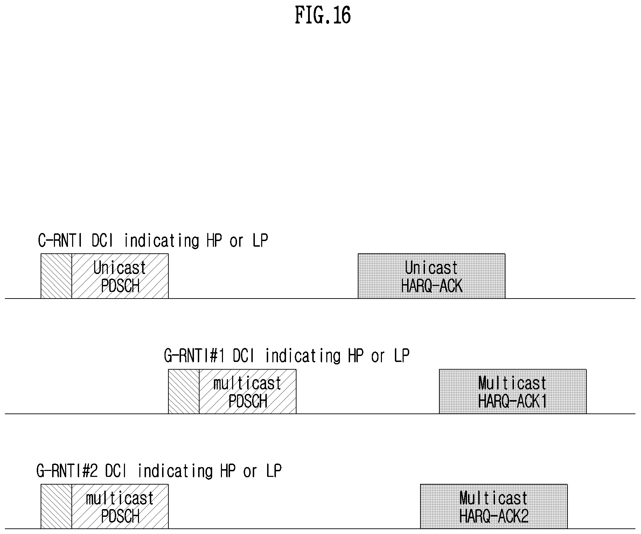

FIG. 16 illustrates transmission and reception of a unicast channel and a multicast channel and HARQ-ACK reporting therefor in a wireless communication system to which the present disclosure may be applied.

Referring to FIG. 16, G-RNTI DCI refers to a DCI with a CRC scrambled using G-RNTI, that is, a group common DCI, and may schedule multicast PDSCH. C-RNTI DCI refers to a DCI with a CRC scrambled using C-RNTI, and may schedule unicast PDSCH. Each DCI may indicate high or low priority.

The UE may receive both unicast PDSCH and multicast PDSCH transmitted through FDM method and/or TDM method. As an example, the unicast PDSCH occasion may be transmitted through the TDM method with the multicast PDSCH occasion for G-RNTI#1, and may be transmitted through the FDM method with the multicast PDSCH occasion for G-RNTI#2.

The base station may configure/provide PDSCH configuration for common frequency resource (CFR) to the UE separately from PDSCH configuration (e.g., PDSCH Config) for BWP. At this time, the CFR may be associated with the active BWP of the UE, and some parameters may be configured in common for the CFR and BWP.

Therefore, the base station may configure/provide some parameters only in one PDSCH configuration without repeating (i.e., not repeatedly configuring) the PDSCH configuration for CFR and the PDSCH configuration for BWP. That is, if the configuration value for parameter A is the same in the PDSCH configuration for CFR and the PDSCH configuration for BWP, the base station may include parameter A only in the PDSCH configuration for BWP.

Additionally or alternatively, apart from SPS configuration for unicast purposes, CFR configuration may include group common SPS configuration. Here, the group common SPS may mean a multicast SPS for connected UEs or a broadcast SPS for idle/inactive/connected UEs.

When a plurality of group common SPS configuration are configured/provided, or group common SPS configuration and UE-specific SPS configuration are configured/provided together, the UE that receives CS-RNTI-based DCI for PTP retransmission for SPS may distinguish between different SPS configurations using the HARQ process ID included in the corresponding DCI.

As an example, if the UE receives a DCI with a CRC scrambled using CS-RNTI, and the HPN value of the received DCI corresponds to a specific SPS configuration index or group common SPS configuration, the UE may determine that the PDSCH scheduled by the DCI retransmits the TB of the SPS PDSCH corresponding to a specific SPS configuration index or group common SPS configuration.

When distinguishing the SPS configuration index or group common SPS configuration based on HPN, that is, HARQ process ID, for different SPS configurations or for UE-dedicated SPS and group common SPS configuration, the base station needs to configure a different number of HARQ processes (e.g., nrofHARQ-Processes) and an offset related to the HARQ process ID (e.g., harq-ProcID-Offset). That is, the base station may configure the number of HARQ processes and the offset related to the HARQ process ID for each SPS setting index, and the UE may determine the HARQ process ID for a specific SPS transmission based on a specific formula (e.g., HARQ Process ID = [floor (CURRENT_slot * 10 / (numberOfSlotsPerFrame * periodicity))] modulo nrofHARQ-Processes + harq-ProcID-Offset).

Alternatively, when a plurality of group common SPS configurations are configured/provided, or when group common SPS configurations and UE-specific SPS configurations are configured/provided together, group common CS-RNTI and unicast CS-RNTI may be configured separately. In this case, the group common SPS and unicast SPS may share the same HARQ process ID by overlapping it.

Alternatively, the same CS-RNTI may be configured for group common SPS configuration and UE-specific SPS configuration, and CS-RNTI-based DCI may be configured/defined to distinguish between PTP retransmission or unicast transmission by including a new indicator. At this time, the new indicator of the corresponding DCI may indicate 1 bit or a group common SPS configuration index.

Alternatively, the same CS-RNTI may be configured for group common SPS configuration and UE-specific SPS configuration, and the group common SPS and the UE-specific SPS may be distinguished through the HARQ process ID included in the CS-RNTI-based DCI. In this case, the group common SPS and unicast SPS need to be used separately/separately from the HARQ processes.

According to the methods described above in this embodiment, the UE may receive SPS (ie, SPS PDSCH) as follows.

For example, an example of an activation command method of a UE-specific PDCCH for activating a group common SPS may be as follows.

For example, the unicast SPS and the group common SPS use the same CS-RNTI, and the DCI for SPS activation may indicate the group common SPS as 1 bit information. At this time, the HPN value of the activated DCI is unrelated to the SPS HARQ process ID to be actually used. In this case, the same SPS configuration index may be configured and used in both the group common SPS and the unicast SPS. That is, the UE may simultaneously activate the group common SPS and unicast SPS with the same SPS configuration index. Additionally, the activation DCI may indicate to simultaneously activate the group common SPS and unicast SPS having the same SPS configuration index, or may indicate to activate only the group common SPS or unicast SPS using the 1-bit information.

Alternatively, the unicast SPS and the group common SPS use the same CS-RNTI, and the DCI for SPS activation may not include the 1 bit information. At this time, the HPN value of the activated DCI may indicate to distinguish between unicast SPS and group common SPS. As an example, unicast SPS and group common SPS may be configured/defined to be mapped to different HPN values. In this case, the same SPS configuration index may not be mapped to the group common SPS and unicast SPS at the same time, and may be mapped only to the group common SPS or unicast SPS. The UE may simultaneously activate group common SPS and unicast SPS with the same SPS configuration index.

Alternatively, unicast SPS and group common SPS use different CS-RNTIs, and DCI for SPS activation may not include the 1-bit information. At this time, the CS-RNTI value of the activated DCI may indicate to distinguish between unicast SPS and group common SPS.

Additionally or alternatively, in the different PDSCHs that may be transmitted through the same cell in FIG. 16, it may be considered that HARQ-ACK for unicast PDSCH is configured to type 3 codebook, and multicast PDSCHs are configured to type 1 codebook or type 2 codebook.

In this case, the UE may construct/determine the type 3 codebook for the HPN value shared by unicast and multicast PDSCHs based on the following methods.

With reference to the above, Hereinafter, in this embodiment, an overriding method is proposed in relation to the group common SPS.

For example, after a specific group common SPS is activated through DCI where the CRC is scrambled using a specific G-CS-RNTI, the UE may decode the TB received through the group common SPS PDSCH by storing it in a HARQ process corresponding to a specific HPN value. Here, the specific HPN value is the same as the HARQ process ID corresponding to the group common SPS PDSCH resource. Thereafter, the UE may receive a DCI with a CRC scrambled from the base station using the UE-specific CS-RNTI or C-RNTI, or receive a DCI with a CRC scrambled using the specific G-CS-RNTI.

If the received DCI indicates a retransmission resource and a specific HPN value, the UE may recognize the retransmission resource as a retransmission resource for the HARQ process corresponding to the indicated HPN value. Accordingly, for the TB received through the corresponding retransmission resource, the UE may decode the TB again by storing the HARQ process corresponding to the indicated HPN value. At this time, DCI for the UE-specific CS-RNTI or C-RNTI may be used to allocate PTP retransmission resources for the group common SPS, and DCI for a specific G-CS-RNTI may be used to allocate PTM retransmission resources for the group common SPS.

In the above method, a specific G-CS-RNTI and the UE-specific CS-RNTI may have a relationship as shown in the following examples, and the relationship may be configured by the base station or pre-defined (in terms of standards).

As an example, depending on the configuration of the base station, a specific G-CS-RNTI may be mapped to a specific UE-specific CS-RNTI. As another example, the UE-specific CS-RNTI of the UE may be mapped to all G-CS-RNTIs for group common SPSs. As another example, if there is an SPS configuration index indicated by a DCI based on a specific UE-specific CS-RNTI, the G-CS-RNTI linked to the SPS configuration index may be mapped to a specific UE-specific CS-RNTI.

In relation to the above method, if the DCI whose CRC is scrambled using C-RNTI indicates a specific HPN value being used by the group common SPS of the G-CS-RNTI, the UE may determine that the corresponding DCI is scheduling a unicast PDSCH. In this regard, the TB received through the unicast PDSCH may replace the TB stored in the HARQ process for the specific HPN value.

Alternatively, in connection with the above method, if the DCI whose CRC is scrambled using C-RNTI indicates a specific HPN value being used by the group common SPS of the G-CS-RNTI, the UE may determine that the corresponding DCI schedules retransmission of the group common SPS PDSCH. In this regard, the UE may accumulate the TB received through the retransmission PDSCH in the TB stored in the HARQ process for the specific HPN value and decode the corresponding TB again.

Additionally or alternatively, the case where the unicast PDSCH that is FDMed and the multicast SPS PDSCH are scheduled in the same slot, after activation of the multicast SPS, may be considered.

In the above case, if the UE has a capability to receive FDM unicast PDSCH and multicast SPS PDSCH, the UE may independently process unicast PDSCH and multicast SPS PDSCH.

On the other hand, if the UE is not capable of receiving FDM unicast PDSCH and multicast SPS PDSCH, the UE may operate according to at least one of the following options (hereinafter, options 5-1 to 5-4).

(Option 5-1) The UE may receive the unicast PDSCH and drop the multicast SPS PDSCH reception.

(Option 5-2) The UE may receive one of the PDSCHs with high priority and drop reception of other (i.e., remaining) PDSCHs with low priority. Here, priority may be indicated by the corresponding DCI.

(Option 5-3) The UE may not expect that the FDM unicast PDSCH and multicast SPS PDSCH are scheduled in the same slot. In this case, the UE may ignore reception of one or all of the PDSCHs.

(Option 5-4) The UE may not expect the unicast PDSCH to override the multicast SPS PDSCH. In this case, the UE may ignore reception of one or all of the PDSCHs.

Additionally or alternatively, if the TDMed unicast PDSCH and the multicast SPS PDSCH are scheduled in the same slot fter activation of the multicast SPS, the UE may operate according to at least one of the following options (hereinafter, options 5-5 to 5-7).

(Option 5-5) The UE may independently process unicast PDSCH and multicast SPS PDSCH.

(Option 5-6) The UE may not expect that the TDM unicast PDSCH and multicast SPS PDSCH are scheduled in the same slot. In this case, the UE may ignore reception of one or all of the PDSCHs.

(Option 5-7) The UE may not expect the unicast PDSCH to override the multicast SPS PDSCH. In this case, the UE may ignore reception of one or all of the PDSCHs.

Additionally or alternatively, if the PTP PDSCH retransmission and the multicast SPS PDSCH for the same G-RNTI or the same G-CS-RNTI or the same service are scheduled in the same slot after activation of the multicast SPS, the UE may operate according to at least one of the following options (hereinafter, options 5-8 and 5-9) .

(Option 5-8) The UE may receive PTP PDSCH retransmission and drop multicast SPS PDSCH reception. In this case, the UE may ignore reception of one or all of the PDSCHs.

(Option 5-9) The UE may not expect PTP PDSCH retransmission to override the same G-RNTI or the same G-CS-RNTI or multicast SPS PDSCH for the same service. In this case, the UE may ignore reception of one or all of the PDSCHs.

Additionally or alternatively, if a PTP PDSCH retransmission and a different G-RNTI or a different G-CS-RNTI or a multicast SPS PDSCH for a different service are scheduled in the same slot after activation of the multicast SPS, the UE may operate according to at least one of the following options (hereinafter, options 5-10 and 5-15).

(Option 5-10) The UE may independently process PTP PDSCH retransmission and multicast SPS PDSCH.

(Option 5-11) The UE may receive PTP PDSCH retransmission and drop multicast SPS PDSCH reception.

(Option 5-12) The UE may receive one of the PDSCHs with high priority and drop reception of other (i.e., remaining) PDSCHs with low priority. Here, priority may be indicated by the corresponding DCI.

(Option 5-13) The UE may not expect FDM PTP PDSCH retransmission and multicast SPS PDSCH to be scheduled in the same slot. In this case, the UE may ignore reception of one or all of the PDSCHs.

(Option 5-14) The UE may not expect PTP PDSCH retransmission to override a different G-RNTI or a different G-CS-RNTI or a multicast SPS PDSCH for a different service. In this case, the UE may ignore reception of one or all of the PDSCHs.

(Option 5-15) The UE may receive one of the PDSCHs with a lower RNTI and drop reception of the other (i.e. remaining) PDSCH with a higher RNTI, and vice versa. In this case, the UE may ignore reception of one or all of the PDSCHs.

Additionally or alternatively, a unicast/multicast dynamic DL grant may be transmitted to override the multicast SPS.

In this case, the UE may expect to be able to override. In this regard, the override may always be possible if the priority of the corresponding DCI is HP (higher priority). Alternatively, the override may be possible only when the priority of the corresponding DCI is higher than the priority of the multicast SPS. Alternatively, the override may always be possible.

On the other hand, the UE may expect that it cannot be overridden. In this regard, the override may be exceptionally possible for the FDM method depending on UE capability. Alternatively, the override may not always be possible. Alternatively, the override may only be possible for G-RNTI and G-CS-RNTI of the same service. At this time, the UE may not expect override for other services or may ignore DCI. Alternatively, the override may be possible for both the same or different services (e.g., RNTI). Alternatively, the override may only be possible for a different service (e.g., RNTI).

Additionally or alternatively, a multicast dynamic DL grant may be transmitted to override the unicast SPS.

In this case, the UE may expect to be able to override. In this regard, the override may always be possible if the priority of the corresponding DCI is HP (higher priority). Alternatively, the override may only be possible if the priority of the corresponding DCI is higher than the priority of the unicast SPS. Alternatively, the override may always be possible upon reception of a multicast dynamic DL grant.

On the other hand, the UE may expect that it cannot be overridden. In this regard, multicast dynamic DL grants may not override unicast SPS. Therefore, the UE can receive only one of the two or only the unicast SPS.

Hereinafter, a method for constructing/determining HARQ-ACK information (e.g., HARQ-ACK codebook) for unicast/multicast transmission and reception as described above is proposed.

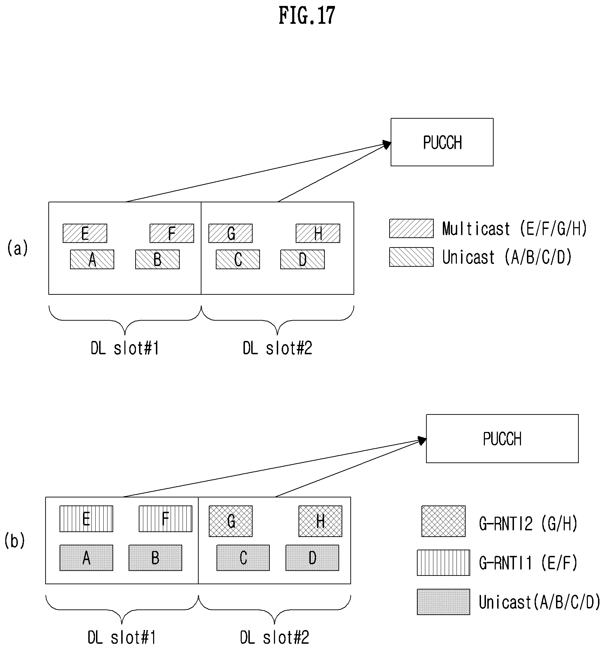

FIG. 17 illustrates transmission and reception of a unicast channel and a multicast channel according to the FDM method in a wireless communication system to which the present disclosure may be applied.

Referring to FIG. 17, FIG. 17(a) illustrates a case where multicast transmissions based on the same G-RNTI as unicast transmission are FDM. FIG. 17(b) illustrates a case in which multicast transmissions based on unicast transmission and different G-RNTIs (e.g., two G-RNTIs) are FDM.

As shown in FIGS. 17(a) and 17(b), HARQ-ACK information for unicast transmission and multicast transmission may be transmitted/reported through PUCCH.

Regarding HARQ-ACK information transmitted through the corresponding PUCCH, the HARQ-ACK codebook for unicast transmission and/or multicast transmission may be constructed/determined/generated based on at least one of the methods in Table 8 below.

Table 8 shows the Type-1 HARQ-ACK codebook construction method for multicast HARQ-ACK when the UE receives multicast transmission from a plurality of serving cells.

[Table 8]

| According to the prior art, UE performs Type-1 codebook construction for FDM-ed unicast and multicast with the same priority as follows at least for reception of one G-RNTI for multicast as shown in the Figure 17 and procedure: |
| --- |

(continued)

| |
|---|
| - For Type-1 HARQ-ACK codebook construction for FDM-ed unicast and multicast with the same priority from the same TRP, HARQ-ACK bits for all the PDSCH occasions over all the slots for all serving cells for unicast, precede, HARQ-ACK bits for all the PDSCH occasions over all the slots for all serving cells for multicast.<br>- If UE reports the capability of supporting the FDM-ed unicast and multicast in the same slot, UE can be indicated semi-statically to generate Type-1 HARQ-ACK codebook as FDM-ed manner. Otherwise, UE does not expect unicast and multicast are to be scheduled in FDM-ed.<br>UE performs the following steps to construct type 1 codebook for FDMed unicast transmissions and multicast transmissions for a same G-RNTI in Figure 17(a).<br>Step1- Generate a sub-codebook#1 for unicast within all the slots,<br>Step2- Generate another sub-codebook#2 for multicast within all the slots,<br>Step3- Append the sub-codebook#2 to sub-codebook#1.<br>**As a result, the order of joint codebook should be (A, B, C, D, E, F, G, G)** |
| UE can be configured with reception of FDMed unicast transmissions and multicast transmissions for multiple G-RNTIs for multicast as in Figure 17(b).<br>* **Alternative 1:**<br>- For the Type-1 codebook construction for FDM-ed unicast and multicast, when UE is configured with multiple G-RNTIs and UE is configured with fdmed-Reception-Multicast, the HARQ-ACK sub-codebook for multicast consists of the sub-codebook for all G-RNTIs. The sub-codebook for each G-RNTI is generated per the k1 and TDRA configurations for the same G-RNTI as the legacy procedure.<br>UE performs the following steps to construct type 1 codebook for FDMed unicast transmissions and multicast transmissions for two G-RNTIs in Figure 17(b).<br>Step1- Generate a sub-codebook#1 for unicast within all the slots,<br>Step2- Generate another sub-codebook#2 for multicast for all G-RNTIs within all the slots,<br>Step3- Append the sub-codebook#2 to sub-codebook#1.<br>**As a result, the order of joint codebook should be (A, B, C, D, E, F, G, H)** |
| * **Alternative 2:**<br>- For the Type-1 codebook construction for FDM-ed unicast and multicast, when UE is configured with multiple G-RNTIs and UE is configured with fdmed-Reception-Multicast, the HARQ-ACK sub-codebook for multicast consists of the sub-codebooks for each G-RNTI by appending one to another in ascending order of G-RNTI value.<br>The sub-codebook for each G-RNTI is generated per the k1 and TDRA configurations for the same G-RNTI as the legacy procedure.<br>The maximum number of G-RNTI(s) configured to UE for the FDMed unicast and multicast |
| Type-1 codebook is up to UE capability.<br>UE performs the following steps to construct type 1 codebook for FDMed unicast transmissions and multicast transmissions for two G-RNTIs in Figure 4-2.<br>Step1- Generate a sub-codebook#1 for unicast within all the slots, Step2- Generate another sub-codebook for multicast for each G-RNTI within all the slots,<br>Generate sub-codebook#2-1 for G-RNTI values 1<br>Generate sub-codebook#2-2 for G-RNTI values 2<br>Append sub-codebook#2-2 to sub-codebook#2-1 based on the ascending order of G-RNTI value Step3- Append the sub-codebook#2 to sub-codebook#1.<br>**As a result, the order of joint codebook should be (A, B, C, D, E, F, G, H, E, F, G, H,)** |
| * **Alternative 3:**<br>UE determines the HARQ-ACK sub-codebook for multicast based on Alternative 2. However, if UCI cannot accommodate the HARQ-ACK sub-codebook for multicast based on Alternative 2, UE determines the HARQ-ACK sub-codebook for multicast based on Alternative 1. |

(continued)

- Option A: If UCI cannot accommodate the HARQ-ACK sub-codebook for multicast generated based on Alternative 2, UE determines the HARQ-ACK sub-codebook for multicast based on Alternative 1. Otherwise, UE determines the HARQ-ACK sub-codebook for multicast based on Alternative 2.

- Option B: If the number of G-RNTIs that UE is interested to receive is equal to or higher than a threshold indicated by gNB, UE determines the HARQ-ACK sub-codebook for multicast based on Alternative 1. Otherwise, UE determines the HARQ-ACK sub-codebook for multicast based on Alternative 2.

- Option C: If the HARQ-ACK sub-codebook for multicast corresponds to a low priority of G-RNTI(s), UE determines the HARQ-ACK sub-codebook for multicast based on Alternative 1. If the HARQ-ACK sub-codebook for multicast corresponds to a high priority of G-RNTI(s), UE determines the HARQ-ACK sub-codebook for multicast based on Alternative 2.

Alternatively, If the HARQ-ACK sub-codebook for multicast corresponds to a high priority of G-RNTI(s), UE determines the HARQ-ACK sub-codebook for multicast based on Alternative 1. If the HARQ-ACK sub-codebook for multicast corresponds to a low priority of G-RNTI(s), UE determines the HARQ-ACK sub-codebook for multicast based on Alternative 2.

- Option D: In case of MTRP, if the HARQ-ACK sub-codebook for multicast corresponds to a first TRP, UE determines the HARQ-ACK sub-codebook for multicast based on Alternative 1.

If the HARQ-ACK sub-codebook for multicast corresponds to a second TRP, UE determines the HARQ-ACK sub-codebook for multicast based on Alternative 2.

- Option E: In case of carrier aggregation or dual connectivity, if the HARQ-ACK sub-codebook for multicast corresponds to a first serving cell or a first serving cell group, UE determines the HARQ-ACK sub-codebook for multicast based on Alternative 1. If the HARQ-ACK sub-codebook for multicast corresponds to a second serving cell or a second serving cell group, UE determines the HARQ-ACK sub-codebook for multicast based on Alternative 2.

The first serving cell group is Secondary Cell Group while the second serving cell group is Primary Cell Group, or vice versa.

The first serving cell is SCell while the second serving cell is PCell (or PSCell), or vice versa.

The first serving cell is a scheduling cell while the second serving cell is a scheduled cell, or vice versa

According to the embodiments of the present disclosure described above, for PTM transmission and PTP retransmission, cross-carrier scheduling/intra-carrier scheduling (e.g., self-scheduling) may be supported through a scheduled cell or scheduling cell. Through this, the base station may flexibly schedule group common transmission in a carrier aggregation (CA) situation.

Additionally, according to the embodiments of the present disclosure described above, it has the advantage of enabling overriding of multicast SPS by clarifying the priority for PTP retransmission/unicast transmission for the same or different services.

## General Device to which the Present Disclosure may be applied

FIG. 18 illustrates a block diagram of a wireless communication device according to an embodiment of the present disclosure.

In reference to FIG. 18, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device XXX, YYY of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device XXX, YYY of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

## Claims

**1.** A method performed by a user equipment in a wireless communication system, the method comprising:

receiving first downlink control information (DCI) indicating a new data indicator (NDI) value and a hybrid automatic repeat request (HARQ) process number value on a first cell;
receiving a group common physical downlink shared channel (PDSCH) scheduled by the first DCI on the first cell,;
receiving a second DCI indicating the NDI value and the HARQ process number value on a second cell; and
receiving a UE-dedicated PDSCH scheduled by the second DCI on the first cell,
wherein, the UE-dedicated PDSCH is received by determining it as retransmission for a transport block (TB) of the group common PDSCH, based on a pre-configured condition.

**2.** The method of claim 1,

wherein the first cell corresponds to a scheduled cell based on carrier aggregation (CA), and
wherein the second cell corresponds to a scheduling cell based on the CA.

**3.** The method of claim 2,

wherein the first cell corresponds to a secondary cell (SCell), and
wherein the second cell corresponds to either a primary cell (PCell) or a secondary cell (SCell).

**4.** The method of claim 1,
wherein the pre-configured condition includes a case in which cross-carrier scheduling for the retransmission of the TB is configured.

**5.** The method of claim 1,
wherein the pre-configured condition includes a case in which a common frequency resource (CFR) configuration is associated with an active bandwidth part (BWP) of the first cell.

**6.** The method of claim 1,
wherein the second DCI further includes a carrier indicator field (CIF) indicating the first cell.

**7.** The method of claim 1,
wherein the first DCI is received through monitoring of a common search space configured in the first cell.

**8.** The method of claim 1,
wherein the second DCI is received through monitoring of a user equipment-specific search space configured in the second cell.

**9.** The method of claim 1,

wherein the first DCI corresponds to a DCI format which is cyclic redundancy check (CRC) scrambled by a group-radio network temporary identifier (G-RNTI), and
wherein the second DCI corresponds to a DCI format which is CRC scrambled by a cell-radio network temporary identifier (C-RNTI)

**10.** The method of claim 1,
wherein transmission of the group common PDSCH corresponds to initial transmission of a PDSCH based on a group common DCI.

11. A user equipment (UE) in a wireless communication system, the UE comprising:

at least one transceiver for transmitting and receiving a wireless signal; and
at least one processor for controlling the at least one transceiver,
wherein the at least one processor configured to:

receive first downlink control information (DCI) indicating a new data indicator (NDI) value and a hybrid automatic repeat request (HARQ) process number value on a first cell;
receive a group common physical downlink shared channel (PDSCH) scheduled by the first DCI on the first cell,;
receive a second DCI indicating the NDI value and the HARQ process number value on a second cell; and
receive a UE-dedicated PDSCH scheduled by the second DCI on the first cell,
wherein, the UE-dedicated PDSCH is received by determining it as retransmission for a transport block (TB) of the group common PDSCH, based on a pre-configured condition.

12. A method performed by a network device in a wireless communication system, the method comprising:

transmitting first downlink control information (DCI) indicating a new data indicator (NDI) value and a hybrid automatic repeat request (HARQ) process number value on a first cell;
transmitting a group common physical downlink shared channel (PDSCH) scheduled by the first DCI on the first cell,;
transmitting a second DCI indicating the NDI value and the HARQ process number value on a second cell; and
transmitting a UE-dedicated PDSCH scheduled by the second DCI on the first cell,
wherein, the UE-dedicated PDSCH is received by determining it as retransmission for a transport block (TB) of the group common PDSCH, based on a pre-configured condition.

13. A network device in a wireless communication system, the network device comprising:

at least one transceiver for transmitting and receiving a wireless signal; and
at least one processor for controlling the at least one transceiver,
wherein the at least one processor configured to:

transmit first downlink control information (DCI) indicating a new data indicator (NDI) value and a hybrid automatic repeat request (HARQ) process number value on a first cell;
transmit a group common physical downlink shared channel (PDSCH) scheduled by the first DCI on the first cell,;
transmit a second DCI indicating the NDI value and the HARQ process number value on a second cell; and
transmit a UE-dedicated PDSCH scheduled by the second DCI on the first cell,
wherein, the UE-dedicated PDSCH is received by determining it as retransmission for a transport block (TB) of the group common PDSCH, based on a pre-configured condition.

14. A processing apparatus configured to control a user equipment (UE) in a wireless communication system, the processing apparatus comprising:

at least one processor; and
at least one computer memory operably connected to the at least one processor and storing instructions that, based on being executed by the at least one processor, perform operations comprising:

receiving first downlink control information (DCI) indicating a new data indicator (NDI) value and a hybrid automatic repeat request (HARQ) process number value on a first cell;
receiving a group common physical downlink shared channel (PDSCH) scheduled by the first DCI on the first cell,;
receiving a second DCI indicating the NDI value and the HARQ process number value on a second cell; and
receiving a UE-dedicated PDSCH scheduled by the second DCI on the first cell,
wherein, the UE-dedicated PDSCH is received by determining it as retransmission for a transport block (TB) of the group common PDSCH, based on a pre-configured condition.

15. At least one non-transitory computer-readable medium storing at least one instruction,

wherein the at least one instruction executable by at least one processor controls a device of performing uplink transmission in a wireless communication system to:

receive first downlink control information (DCI) indicating a new data indicator (NDI) value and a hybrid automatic repeat request (HARQ) process number value on a first cell;
receive a group common physical downlink shared channel (PDSCH) scheduled by the first DCI on the first cell,;
receive a second DCI indicating the NDI value and the HARQ process number value on a second cell; and
receive a UE-dedicated PDSCH scheduled by the second DCI on the first cell,
wherein, the UE-dedicated PDSCH is received by determining it as retransmission for a transport block (TB) of the group common PDSCH, based on a pre-configured condition.

FIG.1

AMF/UPF
AMF/UPF
NGC
NG-C/U
NG-C/U
NG-C/U
NG-C/U
Xn
Xn
Xn
gNB
gNB
gNB
NG-RAN

FIG.2

Radio Frame 10ms
Subframe 1ms
0 1 2 3 4 5 6 7 8 9
Fixed Size
Subframe ={1,2,4} Slots
Slot
0 1 2 3
Slot={7,14} Symbols
Symbol
0 1 2 3 4 5 6 7 8 9 10 11 12 13
Size depends on subcarrier spacing
Mini-Slot (URLLC)
Mini-Slot={2,4,7} Symbols

FIG.3

One Subframe
14 · 2^μ OFDM Symbol
k = N^μ_RB N^RB_SC −1
N^μ_RB N^RB_SC −1 Subcarrier
N^RB_SC Subcarrier
Resource Block
Resource Element
- In a resource grid, (k, l̄)
- In a resource block,(k,l)
k = 0
l = 0
l=14 · 2^μ −1

FIG.4

Freq.
1ms subframe:
14 symbols/slot
12 × 15 KHz
12 × 30 KHz
PRB
12 × 60 KHz
Time

FIG.5

Resource grid
A carrier
(up to 3300 subcarriers,i,e.,275 RBs)
A BWP
1 RB=12 subcarrier
1 RE
1 subcarrier
1 Symbol
k=0
l=0 .....

FIG.6

INITIAL CELL SEARCH
PSS/SSS&
[DLRS]&
PBCH
S601
SYSTEM INFORMATION RECEPTION
PDCCH/
PDSCH
(BCCH)
S602
RANDOM ACCESS PROCEDURE
PRACH
S603
PDCCH/
PDSCH
S604
PUSCH
S605
PDCCH/
PDSCH
S606
GENERAL DL/UL Tx/Rx
PDCCH/
PDSCH
S607
PUSCH/
PUCCH
S608
· DL/UL ACK/NACK
· UE CQI/PMI RI REPORT
USING PUSCH AND PUCCH

FIG.7

TRP 1
TRP 2
Layer group #1
for CW #1
Layer group #2
for CW #1
UE1
(a)

TRP 1
TRP 2
Layer group #1
for CW #1
Layer group #2
for CW #2
UE1
(b)

FIG.8

DL assingment-to-PDSCH offset(K0)
PDCCH
PDSCH
PUCCH
slot
PDSCH-to-HARQ-ACK reporting offset(K1)

FIG.9

UE1
Beam/ TRP1
Beam/ TRP1
UE2
gNB
S901a
S902a
RRC message (SS config,PDSCH-config)
S901b
RRC message (SS config,PDSCH-config)
Monitor PDCCH
Monitor PDCCH
S902b
S903a
Group common DCI for G-RNTI#1 (Repetition=3)
S903b
Group common DCI for G-RNTI#1 (Repetition=3)
S904a
PDSCH for G-RNTI#1
PDSCH for G-RNTI#1
S904b
PDSCH for G-RNTI#1
Receive PDSCH
S905b
Receive PDSCH
S905a
S906b
HARQ NACK on PUCCH
S906a
HARQ ACK on PUCCH
Monitor PDCCH
S907b
S908b
Group common DCI for G-RNTI#1 (Repetition=3)
S909b
PDSCH for G-RNTI#1
Receive PDSCH
S910b
S911a
HARQ NACK on PUCCH
(a)
(b)

FIG.10

Cell 1 and/or BWP 1
G-RNTI DCI
Group Common PDSCH
HARQ-ACK
Cell 2 and/or BWP 2
G-RNTI DCI
Group Common PDSCH
HARQ-ACK

FIG. 11

START
S1110
Receive first DCI indicating NDI value and HPN value on a first cell
S1120
Receive group common PDSCH scheduled by the first DCI on the first cell
S1130
Receive second DCI indicating NDI value and HPN value on a scond cell
S1140
Receive UE dedicated PDSCH scheduled by the second DCI on the first cell
END

FIG. 12

START
S1210
Transmit first DCI indicating NDI value and HPN value on a first cell
S1220
Transmit group common PDSCH scheduled by the first DCI on the first cell
S1230
Transmit second DCI indicating NDI value and HPN value on a scond cell
S1240
Transmit UE dedicated PDSCH scheduled by the second DCI on the first cell
END

FIG.13

Cell 1 and/or BWP 1
G-RNTI DCI
PTM PDSCH
NACK
PTP ReTX PDSCH
Cell 2 and/or BWP 2
C-RNTI DCI

FIG.14

Cell 1 and/or BWP 1
G-RNTI DCI
PTM PDSCH
NACK
Cell 2 and/or BWP 2
C-RNTI DCI
PTP ReTX PDSCH

FIG.15

Cell 1 and/or BWP 1
G-RNTI DCI
PTM PDSCH
NACK
C-RNTI DCI
Cell 2 and/or BWP 2
PTP ReTX PDSCH

FIG.16

C-RNTI DCI indicating HP or LP

Unicast PDSCH

Unicast HARQ-ACK

G-RNTI#1 DCI indicating HP or LP

multicast PDSCH

Multicast HARQ-ACK1

G-RNTI#2 DCI indicating HP or LP

multicast PDSCH

Multicast HARQ-ACK2

FIG.17

PUCCH
(a)
E
F
G
H
A
B
C
D
Multicast (E/F/G/H)
Unicast (A/B/C/D)
DL slot#1
DL slot#2

PUCCH
(b)
E
F
G
H
A
B
C
D
G-RNTI2 (G/H)
G-RNTI1 (E/F)
Unicast(A/B/C/D)
DL slot#1
DL slot#2

Second Device
200
Processor(s)
202
Memory(s)
204
Transceiver(s)
206
208
First Device
100
Processor(s)
102
Memory(s)
104
Transceiver(s)
106
108


FIG.18

## INTERNATIONAL SEARCH REPORT

International application No.
**PCT/KR2023/000329**

**A. CLASSIFICATION OF SUBJECT MATTER**

**H04L 1/18**(2006.01)i; **H04L 5/00**(2006.01)i; **H04W 4/06**(2009.01)i; **H04W 72/04**(2009.01)i; **H04W 72/23**(2023.01)i

According to International Patent Classification (IPC) or to both national classification and IPC

**B. FIELDS SEARCHED**

Minimum documentation searched (classification system followed by classification symbols)

H04L 1/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: MBS(multicast broadcast service), 크로스 캐리어(cross carrier), 셀(cell), 재전송(retransmission), NDI(new data indicator), HARQ(hybrid automatic repeat request), 프로세스 번호(process number)

**C. DOCUMENTS CONSIDERED TO BE RELEVANT**

| Category* | Citation of document, with indication, where appropriate, of the relevant passages | Relevant to claim No. |
|---|---|---|
| A | ERICSSON. Summary#5 of Email discussion [107-e-NR-DSS-01]. R1-2112884, 3GPP TSG-RAN WG1 Meeting #107-e. 23 November 2021. See pages 28 and 31. | 1-15 |
| A | CATT. Discussion on group scheduling mechanism for RRC_CONNECTED UEs in MBS. R1-2111230, 3GPP TSG-RAN WG1 Meeting #107-e. 06 November 2021. See section 2.2.3. | 1-15 |
| A | LENOVO et al. On group scheduling mechanism for RRC_CONNECTED UEs. R1-2112161, 3GPP TSG-RAN WG1 Meeting #107-e. 05 November 2021. See sections 2.2-2.3 and 2.5. | 1-15 |
| A | ZTE. Discussion on mechanisms to Support Group Scheduling for RRC_CONNECTED UEs. R1-2110910, 3GPP TSG-RAN WG1 Meeting #107-e. 06 November 2021. See sections 2.4, 3.5 and 4.2. | 1-15 |
| A | WO 2022-002145 A1 (MEDIATEK SINGAPORE PTE. LTD.) 06 January 2022 (2022-01-06) See claims 1-20. | 1-15 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **14 April 2023** | **18 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/000329**

| Patent document cited in search report | Publication date (day/month/year) | Patent family member(s) | Publication date (day/month/year) |
|---|---|---|---|
| WO 2022-002145 A1 | 06 January 2022 | None | |

Form PCT/ISA/210 (patent family annex) (July 2022)